Europäisches Patentamt

European Patent Office

Office européen des brevets

(11) Numéro de publication: **0 335 796 B1**

(12) **FASCICULE DE BREVET EUROPEEN**

(45) Date de publication de fascicule du brevet: **08.06.94**   (51) Int. Cl.⁵: **A47J 27/16**

(21) Numéro de dépôt: **89400871.3**

(22) Date de dépôt: **29.03.89**

(54) **Procédé et appareil de traitement thermique pour des préparations de substances alimentaires au moyen de la vapeur d'eau.**

(30) Priorité: **29.03.88 FR 8804095**

(43) Date de publication de la demande:
**04.10.89 Bulletin  89/40**

(45) Mention de la délivrance du brevet:
**08.06.94 Bulletin  94/23**

(84) Etats contractants désignés:
**AT BE CH DE ES FR GB GR IT LI LU NL SE**

(56) Documents cités:
**EP-A- 0 191 267**
**CH-A- 453 617**
**FR-A- 1 114 398**

(73) Titulaire: **ASSOCIATION POUR LA RECHER-
CHE ET LE DEVELOPPEMENT DES METHO-
DES ET PROCESSUS INDUSTRIELS (ARMI-
NES)**
**60, Boulevard Saint-Michel**
**F-75272 Paris Cédex 06(FR)**

(72) Inventeur: **Desage, Robert**
**31 rue de Bazincourt**
**F-78480 Verneuil-sur-Seine(FR)**
Inventeur: **Fraile, Patricia**
**35 Rue Henri Paul**
**F-77430 Champagne-sur-Seine(FR)**
Inventeur: **Renon, Henri**
**10 Avenue Anonet**
**F-92320 Sceaux(FR)**

(74) Mandataire: **Bruder, Michel**
**Cabinet Michel Bruder**
**Conseil en Brevets**
**10, rue de la Pépinière**
**F-75008 Paris (FR)**

EP 0 335 796 B1

## Description

La présente invention concerne un procédé et un appareil de traitement thermique pour des préparations, des cuissons et le réchauffage de substances alimentaires au moyen de la vapeur d'eau.

Dans les secteurs ménagers, des services du commerce de détail de la restauration, des collectivités ainsi que dans l'industrie agro-alimentaire en général on utilise des appareils divers qui vont de la simple casserole posée sur une plaque chauffante, par exemple, jusqu'à des enceintes de cuisson de capacités variables, allant du minifour au four de forte puissance, en passant par les grille-viandes électriques ou bien encore, par exemple, les appareils à saucisses chaudes, ainsi que, par exemple, des fours tunnel. Dans l'ensemble de ces appareils les substances alimentaires peuvent subir des traitements divers et variés qui constituent soit une préparation (blanchir ou pocher par exemple), soit une cuisson (poellage ou rotissage par exemple), soit encore un réchauffage d'aliments déjà cuits par exemple.

Tous ces appareils utilisent, suivant les buts recherchés et les genres de cuisson à réaliser, différents modes de propagation de la chaleur à savoir la conduction, le rayonnement d'une résistance électrique lié ou non à la convection naturelle ou forcée, le rayonnement électromagnétique simple ou combiné aux précédents, le mode à induction et la cuisson par la vapeur d'eau.

Dans le domaine de la cuisson à la vapeur, on connaît des cuiseurs fonctionnant en pression ou non, qui vont de la cocotte minute au four à vapeur de type restauration ou industriel, ainsi que des mijoteurs à plusieurs compartiments dont le plus bas contient de l'eau que l'on porte à ébullition. Par ailleurs, on utilise également des minifours ou des fours de type restauration qui combinent la vapeur avec le rayonnement d'une résistance ou la convection forcée de l'air chaud ou la combinaison de ces deux modes.

Actuellement ce mode de propagation de la chaleur par utilisation de vapeur d'eau, s'il présente un bon rendement énergétique et conserve les divers éléments nutritifs, a toutefois le désavantage de ne pas permettre d'effectuer des grillades et il n'est pratiquement utilisé que pour le réchauffage, le mijotage et la cuisson des poissons, en raison d'une trop grande quantité de condensats. Par ailleurs la vapeur présente bien souvent des dangers d'explosion lorsqu'elle est utilisée en pression.

Il existe une autre gamme d'appareils décrits dans des brevets dont aucune forme commerciale, appliquée à la cuisson des aliments, n'est actuellement connue.

Le brevet CH-A-453617 concerne un système automatique de régulation d'une enceinte, par mélange d'air comprimé et de vapeur d'eau, dans le but de limiter l'introduction de vapeur au strict minimum nécessaire à l'entretien de la température de consigne. Dans les brevets FR-A-2 201 747, FR-A-2 593 587 et EP-A-0 191267 les appareils présentés ne se composent que d'un surchauffeur, intégré ou non au générateur de vapeur, fonctionnant à la pression atmosphérique dans une gamme de température comprise entre 100°C et 450°C. Ce système est intégré ou non à l'enceinte de cuisson vers laquelle est dirigée la vapeur surchauffée ainsi produite. Dans le cas du brevet FR-A-2 593 587 cette vapeur surchauffée est dirigée vers des résistances électriques situées en bas et en haut à l'intérieur de l'enceinte.

Si les appareils suivant les brevets précités permettent d'obtenir de la vapeur surchauffée dans une gamme de température relativement large, aucun d'eux ne signale un débit variable de vapeur d'eau, ni un chauffage indépendant et régulé des parois de l'enceinte dans le but de compenser les pertes thermiques et par là, que la vapeur cède préférentiellement son énergie calorifique aux substances alimentaires. Ceci explique la nécessité, pour ces appareils, de fournir une vapeur surchauffée à très haute température (environ 450°C).

Par ailleurs le brevet FR-A-1114398 est le seul à donner des résultats sur l'application de l'appareil décrit à la fonction de cuire des aliments. Dans ce brevet, le procédé de cuisson présenté consiste en une combinaison de moyens permettant d'obtenir, à l'intérieur d'une enceinte fermée hermétiquement, de la vapeur dans une gamme de température comprise entre 118 et 300°C et une gamme de pression variant entre le vide, la pression atmosphérique et une pression maximale de 4,9 bars avec une préférence pour 0,98 bar. Suivant les types d'aliments, la cuisson se déroule à des températures voisines de celles utilisées en cuisson classique: 200-240°C pour la viande et 120-140°C pour les légumes. Le cycle de cuisson est divisé en trois phases successives comprenant une première phase au cours de laquelle on fait bouillir l'aliment sous pression à environ 200°C pour de la viande, suivi d'un processus de friture à pression atmosphérique et à température légèrement plus élevée (environ 230°C), et enfin une finition de friture sous vide, les parois de l'enceinte restant aux environs de 230°C. Lorsque l'aspect friture n'est pas désiré, pour les légumes par exemple, la première phase à environ 140°C est utilisée seule ou combinée avec la mise sous vide pendant un temps très court et des températures de parois proches de 140°C. Aucun reseignement concernant la taille des échantillons traités n'est donné, et par conséquent il est bien difficile de comparer ces résultats avec d'autres types de cuisson.

Compte tenu de ces résultats, il semble que la pression est préjudiciable pour le temps de cuisson, puisque les meilleurs résultats sont obtenus en vapeur humide.

Il est à noter qu'à la cocotte minute, la cuisson des pommes de terre d'un diamètre moyen de 4 cm demande 10 à 12 minutes à partir de la rotation de la soupape, ce qui représente environ 20 à 25 minutes de temps de cuisson total. Les résultats donnés dans le brevet sont donc à prendre avec précaution.

On peut en conclure que si la sophistication de l'appareil suivant le brevet FR-A-1114398, qui comporte des moyens de chauffage, de pression et de mise sous vide semble apporter une amélioration significative sur l'aspect extérieur des aliments par rapport à d'autres matériels fonctionnant en pression, il ne permet pas d'effectuer toutes sortes de cuissons notamment les pâtisseries. De par sa conception complexe, il est d'un prix de revient relativement élevé et, de ce fait, il ne peut atteindre que difficilement le marché de la petite restauration et celui de l'appareillage destiné au grand public.

Tous les appareils connus, commercialisés ou non, présentent des inconvénients d'ordre technique (conception, utilisation, rendement etc), de spécificité vis-à-vis des différents modes de cuisson et également des inconvénients chimio-biologiques en ce qui concerne la qualité de la cuisson et l'entretien des différents éléments constituant ces appareils (four à pyrolyse par exemple).

La présente invention vise à remédier à ces inconvénients en procurant un procédé et un appareil permettant d'obtenir de meilleures conditions de cuisson, une meilleure qualité organoleptique et nutritive de l'aliment cuit, une réduction importante des temps de cuisson et un meilleur rendement énergétique.

La présente invention a pour objet un procédé de cuisson ou de réchauffage d'un aliment à l'intérieur d'une enceinte à la pression atmosphérique, dans lequel on produit de la vapeur d'eau, on surchauffe cette vapeur d'eau, et on l'introduit dans l'enceinte, caractérisé en ce qu'il comporte les étapes consistant à porter les parois de l'enceinte, à une température au moins égale à la température d'ébullition de l'eau à la pression atmosphérique, à projeter sur l'aliment ladite vapeur d'eau surchauffée, pour le soumettre à un traitement thermique pouvant comporter plusieurs phases, les conditions de température de vapeur d'eau, de température de parois de l'enceinte, et de débit de vapeur étant soit définies au cours du traitement, en fonction de la différence de température entre le coeur et la surface de l'aliment pour la cuisson désirée, soit prédéfinies par un mode opératoire ou une recette de cuisson établie lors d'essai antérieurs.

Pendant son transfert entre un générateur de vapeur et l'enceinte de traitement, la vapeur est surchauffée dans une gamme de température comprise, préférentiellement, entre 100C° et 300°C. Pour un type de traitement donné on régle de préférence la température de la vapeur dans l'enceinte et en sortie du surchauffeur, ainsi que celle des parois de l'enceinte et proche de la température de vapeur.

Suivant l'invention on peut chauffer l'aliment, soit au moyen de vapeur d'eau seule, soit au moyen d'un mélange de vapeur d'eau et de gaz inerte, tel que de l'air par exemple, lorsque l'on désire mettre en oeuvre le procédé à une température inférieure à la température d'ébullition de l'eau à la pression atmosphérique c'est-à-dire inférieure à 100°C.

En utilisant, suivant l'invention, la vapeur d'eau à une température comprise, de préférence dans une gamme de température de 100°C à 300°C, pour cuire ou réchauffer les aliments, on obtient l'avantage de pouvoir effectuer notamment des grillades en obtenant un produit grillé ayant une aspect voisin de celui obtenu à la suite du chauffage par le rayonnement d'une flamme, et ce sans que l'aliment soit pyrolysé, contrairement au cas du rayonnement ou de la conduction qui portent la surface à une température plus élevée que nécessaire. Ce traitement thermique à la vapeur permet de conserver une grande majorité des sels minéraux et des vitamines, d'éviter les pertes en poids, de conserver et de développer les arômes, de respecter les structures et donc de retrouver le goût naturel d'un aliment qui est constitué par un complexe des perceptions de l'odeur, de la saveur et de la consistance. L'invention permet avantageusement de traiter les produits agro-alimentaires en vue de leur consommation immédiate (cuisson, réchauffage et décongélation par exemple) ou bien de leur conservation (stérilisation, pasteurisation) ou encore, de leur préparation pour leur conservation en chaine froide telle que la réfrigération, la congélation, la surgélation, mise sous vide ou sous atmosphère neutre etc.

D'autres avantages procurés par l'invention sont qu'elle permet d'obtenir, couramment, un excellent rendement thermique, une élévation très rapide de la température de la vapeur, d'utiliser beaucoup moins de vapeur donc d'obtenir moins de condensats, d'utiliser la vapeur à la pression atmosphérique dans toute la gamme de température, d'avoir un débit de cuisson beaucoup plus important pour un même volume d'enceinte, de diminuer les encombrements des appareils et par voie de conséquence d'obtenir un faible prix de revient des aliments cuits. En réglant la température de la vapeur à une valeur relativement basse par rapport à celle obtenue près d'une source de rayonnement thermique on peut localiser l'arrivée de cette vapeur près de l'aliment, ce qui permet, entre autres, de bien dominer les temps de cuisson lorsqu'on utilise une sonde de température mesurant la température interne de l'aliment qui devient un critère de qualité de cuisson. Du fait que sur les parois de l'appareil on ne trouve pratiquement pas de particules

3

pyrolysées et que la vapeur d'eau se trouve disponible, le nettoyage de l'enceinte de cuisson ainsi que des plats est grandement facilité.

La présente invention a également pour objet un appareil de cuisson, ou de réchauffage d'un aliment, à la vapeur d'eau dans une enceinte à la pression atmosphérique, comprenant des moyens de production de vapeur d'eau, des moyens assurant le surchauffage de la vapeur d'eau avant son introduction dans l'enceinte, des moyens distributeurs, ou diffuseurs, de cette vapeur d'eau surchauffée, dans l'enceinte, et des moyens pour contrôler la température de la vapeur sortant des moyens diffuseurs, caractérisé en ce que lesdits moyens distributeurs ou diffuseurs de la vapeur d'eau surchauffée débouchent en regard et à proximité immédiate de l'aliment, et en ce qu'il comprend des moyens de chauffage des parois de l'enceinte à une température au moins égale à la température d'ébullition de l'eau à la pression atmosphérique.

L'invention peut être utilisee dans toutes sortes d'appareils ou dispositifs allant par exemple du petit appareillage électroménager au four encastré, ou encore par exemple dans un appareillage professionnel ou des services tels que, par exemple, dans des boucheries, charcuteries, bars, restaurants ou lignes de fabrication pour les cuissons industrielles. Les appareils suivant l'invention peuvent être utilisés pour cuire ou réchauffer par exemple des oeufs ou des entrées, des viandes sous forme de pièces à rôtir (rôti, volaille, gibier, jambon etc) ou sous forme de grillades, des gratins, des légumes, des desserts, ainsi que le pain de toute composition ou des groupes de pains. On peut également utiliser l'appareil suivant l'invention pour réaliser le réchauffage de plats prépréparés ou encore effectuer la torréfaction de produits alimentaires tel que le café, le malt, le cacao, etc..

D'autres formes d'éxécution font l'objèt des revendications indépendantes.

On décrira ci-après, à titre d'exemples non limitatifs, diverses formes d'exécution de la présente invention, en référence au dessin annexé sur lequel :

La figure 1 est une vue en coupe verticale d'un appareil expérimental de cuisson ou de réchauffage d'aliments suivant l'invention.

La figure 2 est une diagramme illustrant la variation de température de différentes viandes en fonction du temps.

La figure 3 est un diagramme illustrant la variation de température de différents légumes en fonction du temps.

La figure 4 est un diagramme illustrant l'influence de la présence de vapeur ou d'air sur la température de cuisson d'un cylindre de pomme de terre.

La figure 5 est un diagramme illustrant l'influence de la taille sur la cuisson d'un cylindre de pomme de terre.

La figure 6 est un diagramme illustrant l'influence de la température de vapeur sur la température de cuisson d'un cylindre de pomme de terre.

La figure 7 est un diagramme illustrant l'influence du débit de vapeur sur la température de cuisson d'un cylindre de pomme de terre.

La figure 8 est un diagramme illustrant l'influence de la température de la vapeur sur la cuisson d'un rôti de proc.

La figure 9 est un diagramme illustrant l'influence de la température de la vapeur pour un rôti de porc congelé.

La figure 10 est une vue en coupe axiale d'un diffuseur de vapeur de type tubulaire équipé d'une source chauffante.

La figure 11 est une vue en perspective d'un diffuseur de vapeur du type semi-cylindrique équipé d'une source chauffante.

La figure 12 est une vue en coupe verticale d'un appareil destiné à cuire des fondues.

La figure 13 est une vue en coupe verticale d'une enceinte de cuisson équipée d'un conduit élevant la température de la vapeur.

La figure 14 est un schéma d'une installation comprenant plusieurs fours alimentés en vapeur à partir d'une centrale de vapeur commune.

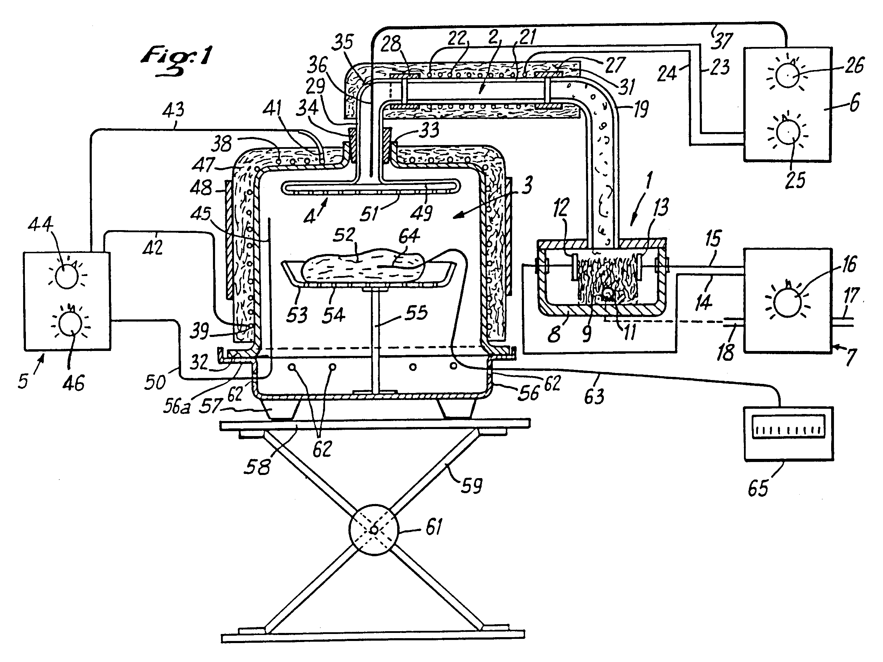

L'appareil de cuisson ou de réchauffage d'aliment suivant l'invention qui est représenté sur la figure 1 comprend essentiellement un générateur de vapeur 1, un dispositif élévateur de la température de la vapeur 2, une enceinte de cuisson ou de réchauffage des aliments 3, un diffuseur de vapeur 4 et des dispositifs 5,6,7 de contrôle du fonctionnement des divers éléments de l'appareil.

Le générateur de vapeur 1 qui est utilisé dans l'appareil suivant l'invention, est par exemple du type à vaporisation rapide provoquée par le passage d'un courant électrique dans un milieu poreux équipé d'électrodes, et avec lequel on peut faire varier le débit de vapeur produite dans un rapport de 1 à 10 par admission d'un débit d'eau, entrant dans le corps poreux, contrôlé par le réglage du courant de vaporisation. Ce générateur de vapeur 1 comporte une enceinte 8 à l'intérieur de laquelle est disposé le corps poreux 9 alimenté, à sa partie basse, par de l'eau qui diffuse dans celui-ci par des trous ménagés dans un tube d'alimentation en eau 11. Au corps poreux 9 sont associées deux électrodes 12 et 13 disposées en regard l'une de l'autre, avec le corps poreux logés entre elles. Les deux électrodes 12,13 sont reliées respectivement, par l'intermédiaire de conducteurs électriques 14,15, aux deux bornes de sortie d'un dispositif 7 commandant l'intensité du courant de vaporisation. Le dispositif de contrôle 7 comporte un bouton de réglage 16 permettant de faire varier l'intensité du courant de vaporisation et également d'ajuster, corrélativement, le débit d'eau entre une canalisation d'entrée 17, reliée à une canalisation de distribution d'eau de ville, et une canalisation de sortie 18 qui est reliée au tube 11. La vapeur produite dans le générateur 1 est à une température voisine de 100°C et est transmise, par un tube 19, au dispositif élévateur de température 2.

Le dispositif 2 d'élévation de la température de la vapeur est constitué par un tube horizontal en verre 21, par exemple du type "PYREX". A l'extérieur du tube 21 est bobinée une résistance de chauffage 22, enroulée en hélice collée au tube 21 au moyen d'un vernis. Les deux extrémités de la résistance de chauffage 22 sont reliées respectivement, par des conducteurs électrique 23,24, à deux bornes de sortie du dispositif de contrôle 6. Ce dispositif 6 comporte un bouton de réglage 25 permettant de régler la puissance fournie à la résistance 22 en fonction du débit et de la température de vapeur que l'on impose afin d'obtenir une bonne régulation. Le dispositif 6 comporte un autre bouton 26 permettant d'afficher la température de vapeur désirée, entre 100°C et 300°C. Le tube en verre 21, portant, à l'extérieur, la résistance de chauffage 22, est accouplé, à ses deux extrémités, par l'intermédiaire de manchons 27,28 assurant l'étanchéité, respectivement au tube 19 d'arrivée de vapeur à une température voisine de 100°C et à un tube 29 de sortie de vapeur à température élevée. Cet ensemble est isolé thermiquement sur toute sa surface par un matelas 31 de fibres isolantes, par exemple de fibres d'alumine, connues sous le nom de "KERLAN".

La vapeur à température élevée est introduite par le tube 29 dans l'enceinte de traitement thermique 3 des aliments. Cette enceinte, réalisée par exemple en verre du type "PYREX", a une forme de cloche et elle comporte à sa partie inférieure, une collerette externe 32 sur toute sa périphérie. Au centre de sa partie supérieure elle présente un orifice 33 dans lequel est engagé un bouchon 34 traversé verticalement par le conduit 29 relié au dispositif élévateur de température 2. Dans la partie coudée de ce tube 29 est ménagé un trou 35 traversé par un thermocouple 36. Ce thermocouple 36 s'étend verticalement dans le tube 29 jusqu'à proximité immédiate du diffuseur de vapeur 4 auquel se raccorde le tube 29 à l'intérieur de l'enceinte de cuisson 3. La traversée de la paroi du tube coudé 29 par le thermocouple 36 s'effectue d'une manière étanche et ce thermocouple 36 est relié, par l'intermédiaire d'un conducteur 37, au dispositif de contrôle 6 pour permettre le réglage de la température au moyen du bouton de réglage 26.

L'enceinte de cuisson 3 est équipée, sur sa surface extérieure, d'une résistance chauffante 38, collée au moyen d'un vernis, dont le bobinage débute à une extrémité inférieure 39, proche de la collerette inférieure 32, et se termine à une extrémité supérieure 41 au sommet de l'enceinte. La résistance chauffante 38 forme ainsi un bobinage hélicoïdal autour de la paroi latérale verticale de l'enceinte 3, lequel se prolonge par un bobinage spiralé sur la paroi horizontale supérieure de cette enceinte. Les deux extrémités 39,41 de la résistance chauffante 38 sont reliées respectivement, par l'intermédiaire de conducteurs électriques 42,43, à deux bornes de sortie du dispositif de contrôle 5 qui permet de régler, au moyen d'un bouton 44, la puissance électrique fournie à la résistance chauffante 38. Cette puissance est asservie par le maintien du niveau de température, dans une gamme de 100°C à 300°C, et ce niveau de température est piloté par une sonde 45 placée sur la paroi à l'intérieur de l'enceinte de cuisson 3, qui est reliée par un conducteur 50 au dispositif de contrôle 5 pourvu d'un bouton de réglage de température 46.

L'enceinte de cuisson 3 est isolée thermiquement, sur toute sa surface, par un matelas 47 de fibres isolantes, telles que des fibres d'alumine connues sous le nom de "KERLAN". Cette enceinte et son isolant thermique 47 sont maintenus par un collier 48 qui assure, à l'aide d'un support, une position fixe.

Le diffuseur de vapeur 4 qui est situé à la partie supérieure de l'enceinte de cuisson 3, est constitué par une cavité 49 dans laquelle débouche le tube 29 et qui est délimitée, à sa partie inférieure, par une paroi horizontale percée de trous 51 répartis uniformément sur toute sa surface, de façon que la vapeur produite soit en légère surpression pour qu'elle atteigne un aliment à cuire 52 situé en dessous du diffuseur de vapeur 4. Cet aliment 52 est posé sur une plateau horizontal 53 percé de trous 54 répartis uniformément sur toute la surface du plateau. Le plateau 53 est supporté par une tige verticale 55 fixée à un récipient inférieur 56 ayant le même diamètre inférieur que l'enceinte de cuisson 3 et présentant une collerette externe supérieure 56a. Ce récipient 56 repose, par l'intermédiaire de pieds 57, sur une table élévatrice 58 de hauteur réglable. La hauteur de la table élévatrice 58 est ajustée au moyen d'un croisillon 59 actionné par un bouton 61 solidaire d'une vis mère afin d'élever ou d'abaisser la table 58 et par conséquent le plateau 53 à l'intérieur de l'enceinte de cuisson 3.

La paroi latérale verticale du récipient 56 est percée de trous 62 uniformément répartis sur son pourtour et sensiblement à mi-hauteur. A travers l'un de ces trous 62 passe le conducteur 50 reliant la sonde de température 45 située à l'intérieur de l'enceinte de cuisson 3 au dispositif 5 de maintien de la température. A travers un autre trou 62 passe un conducteur 63 s'étendant entre une sonde de température 64, enfoncée dans l'aliment à cuire 52, et un appareil 65 mesurant l'élévation de la température de l'aliment.

L'appareil de cuisson qui vient d'être décrit fonctionne de la manière suivante : au moyen du bouton 26 on règle la température désirée de la vapeur entrant dans le diffuseur 4. Au moyen du bouton 46 on règle la température désirée aux parois de l'enceinte de cuisson 3. Au moyen des boutons 25 et 44 on règle les puissances électriques fournies aux résistances chauffantes 21 du dispositif élévateur de température 2 et 38 de la paroi de l'enceinte de cuisson 3. On règle également le débit de vapeur au moyen du bouton 16. Tous ces réglages sont effectués en fonction des genres d'aliments à cuire et des qualités désirées pour chacun des aliments cuits.

La mise en place de l'aliment à cuire 52 s'effectue de la façon suivante : à l'aide du bouton 61 de la table élévatrice 59, on abaisse la table 58 sur laquelle repose le récipient 56. Sur ce récipient est maintenue la tige 55 qui supporte, à son extrémité supérieure, le récipient 54. Cet ensemble étant complètement dégagé en dessous de l'enceinte de cuisson 3, qui reste fixe, on place l'aliment 52 dans le récipient 53 et on introduit ensuite le thermocouple 64 dans l'aliment, de préférence au centre de celui-ci, afin de suivre l'évolution de la température de l'aliment pendant tout le cycle opératoire. Une fois ce chargement effectué on fait remonter le plateau 58 et tous les éléments qu'il porte, jusqu'à ce que la collerette externe supérieure 56a du récipient 56 vienne en contact avec la collerette externe inférieure 32 de l'enceinte de cuisson 3.

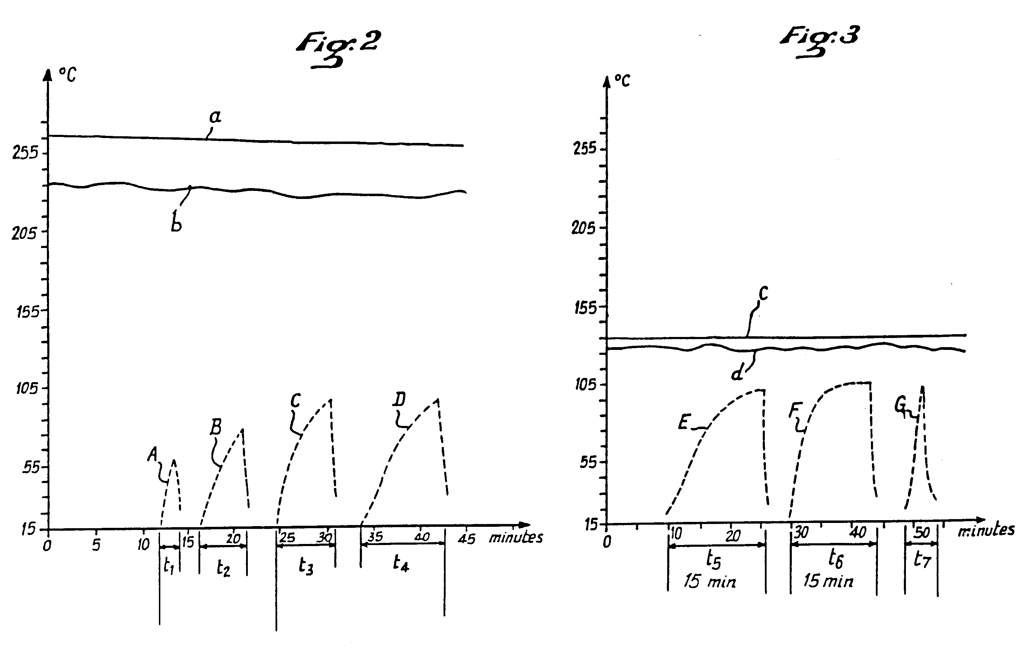

Les diagrammes des figures 2 et 3 donnent des exemples de résultats obtenus dans la mise en oeuvre de l'appareil décrit en référence à la figure 1. Sur ces diagrammes la température, en degrés Celsius, est portée en ordonnée tandis que le temps est porté, en minutes, en abscisse, pour des cuissons de viandes, de légumes et de fruits. Pour obtenir ces résultats, après avoir fait préalablement des réglages de puissance pour chacune des résistances 21,38 du dispositif élévateur de la température 2 de la vapeur et de l'enceinte de cuisson 3, on régle, pour les viandes, le débit de vapeur à 210g/h, la température de la vapeur à 260°C (valeur a sur le diagramme de la figure 2) et la température des parois de l'enceinte de cuisson 3 à 230°C (valeur b sur le diagramme de la figure 2). Pour les légumes et les fruits le débit de vapeur est réglé à 210g/h, la température de la vapeur est à 135°C (valeur c sur le diagramme de la figure 3) et la température des parois de l'enceinte de cuisson 3 est à 125°C (valeur d sur le diagramme de la figure 3). Dans cet exemple de résultat et de réalisation le dispositif élévateur de la température de vapeur 2 permet d'atteindre une température de vapeur de 250°C au bout d'une période de temps de 2,5 minutes.

Pour des dimensions d'échantillons de viande faisant environ 30mm par 30mm et ayant une épaisseur de 12mm, la courbe A (figure 2) indique le cas d'une viande "saisie" pour laquelle on obtient une température à coeur de 58°C au bout de 2 minutes (durée de cuisson t1). Cette viande a alors un aspect voisin de celui obtenu dans une poêle, elle présente un aspect rougeâtre sur les deux tiers de son épaisseur et elle a une saveur caractéristique voisine de celle qu'elle a lorsqu'elle est mangée crue avec une sortie de jus lors de la cuisson de la viande sans qu'apparaissent des particules pyrolysées sur la surface. La courbe B illustre le résultat obtenu pour une même viande de boeuf bien cuite dont la température atteinte à coeur a été de 76,7°C au bout d'une durée de cuisson t2 de 5 minutes. La viande cuite présente le même aspect général que la viande cuite de la façon précédente, elle a un aspect rougeâtre limité à une zone correspondant environ au tiers de son épaisseur, tout en restant tendre et non pas comme si elle était cuite à la vapeur à basse température ou à l'eau. La courbe C illustre la cuisson d'un morceau de porc, sans gras à l'intérieur et sur le pourtour, pour une durée de cuisson t3 de 6 minutes et une température à coeur finale de 95,9°C. La courbe D illustre le cas d'un même échantillon de porc avec du gras sur une partie du pourtour, pour une durée de cuisson t4 de 8 minutes et une température à coeur finale de 94,5°C. Les deux échantillons cuits de cette façon sont moelleux, de bel aspect, non secs comme cela est bien souvent le cas dans une poêle ou sur un gril, avec en plus une odeur agréable lors de la cuisson.

La figure 3 illustre les résultats obtenus avec des légumes et des fruits dont les morceaux ont environ 40mm par 40mm et une épaisseur de 20mm. La courbe E illustre le résultat obtenu avec de la pomme de terre. Dans ce cas on obtient, après une durée de cuisson t5 de 16 minutes une température à coeur de 100°C sans que la pomme de terre se défasse, avec une saveur agréable persistante et sucrée. La courbe F illustre le résultat obtenu avec un échantillon de carotte et dans ce cas on atteint, après une durée de cuisson t6 de 14 minutes, une température à coeur de 103,6°C en conservant pratiquement l'aspect et la saveur d'origine de l'échantillon qui est toutefois relativement tendre et non défait après cuisson. La courbe

6

G illustre le résultat obtenu avec un échantillon de pomme d'arbre fruitier et dans ce cas on atteint, après une durée de cuisson t7 et 4 minutes, une température à coeur de 100°C en conservant la structure du morceau de pomme avec une excellente saveur voisine de celle à l'origine et une bonne odeur lors de la cuisson. Ce genre de fruit a été ensuite mise au congélateur puis ramené à la température ambiante et on a alors retrouvé les mêmes qualités de saveur et d'odeur, ce qui permet de conserver à celle-ci une structure proche de la structure initiale.

En plus des exemples de cuisson précités, on a également cuit, au moyen de l'appareil suivant l'invention, des marrons surgelés en 6 minutes pour une température de vapeur de 130°C, de la côte de mouton en 3 minutes pour une température de vapeur de 250°C, de la saucisse cocktail en 5 minutes pour une température de vapeur de 250°C, du fromage à raclette en 4 minutes pour une température de vapeur de 250°C et de la banane en 4 minutes pour une température de vapeur de 130°.

Cuisson des viandes température : 250°C à 260°C

- Boeuf (faux-filet, entrecôte)   épaisseur 1,5 cm, durée : 2 min
                                  aspect saignant.

    "        "         "              "      1,5 cm,    "      5 min
                                  bien cuit

- Porc (filet et échine)          épaisseur 1,5 cm,    "      6 min
                                  aspect rosé

    "        "         "              "      1,5 cm,    "      8 min
                                  bien cuit
    "        "         "              "      3,0 cm,    "      8 min
                                  aspect rosé
    "        "         "              "      3,0 cm,    "     10 min
                                  bien cuit

- Mouton (côte)                   épaisseur 2,0 cm,    "      3 min

- Saucisse cocktail               aspect rosé          "      5 min

Cuisson du pain température : 220-230°C

- Pain aux raisins précuits congelés : aspect doré durée 8 à 9 min.
- baguette de pain diamètre 50 mm, longueur 80 mm : durée 9 min

Cuisson du cake température : 180°C à 190°C

- Cylindre diamètre 5 cm, hauteur : 6 cm en final : durée 25 min aspect doré

Cuisson de légumes température 120°C à 130°C

- Pomme de terre, demi-sphère diamètre : 4 cm : durée 15 à 16 min bien cuite
- Carotte rondelle de 2,5 cm, épaisseur 4 cm: durée 14 min

Cuisson des fruits température : 120°C à 130°C

- Pomme: volume 1/8 de celle-ci durée cuisson 4 mn
- Poire, volume 1/8 de celle-ci durée cuisson 6 min
- Banane, diamètre 2 cm épaisseur 4 cm durée cuisson 6 min
- Marron congelé, diamètre 2 cm durée cuisson 6 min

Ces essais ont été refaits dans un four de plus grand volume avec lequel on a obtenu des résultats voisins, pour des produits identiques, tout en cuisant d'autres genres de produits. On donnera ci-après le résumé, de ces quelques exemples de résultats.

Sur le tableau I de la page suivante on indique quelques résultats comparatifs de temps de cuisson d'aliments pour un appareil suivant l'invention, un mini-four vapeur, un four micro-ondes et un four type encastrable.

D'autres tests de cuisson ont permis de mettre en évidence l'influence de différents paramètres sur le temps de cuisson, la perte en eau du produit et son aspect extérieur en fin de cuisson. Ces différents paramètres sont les suivants :

- Dimension de l'échantillon
- Humidité initiale de l'échantillon
- Température de vapeur dans l'enceinte de cuisson
- Température des parois proches de la température de vapeur
- Débit de vapeur dans l'enceinte de cuisson.

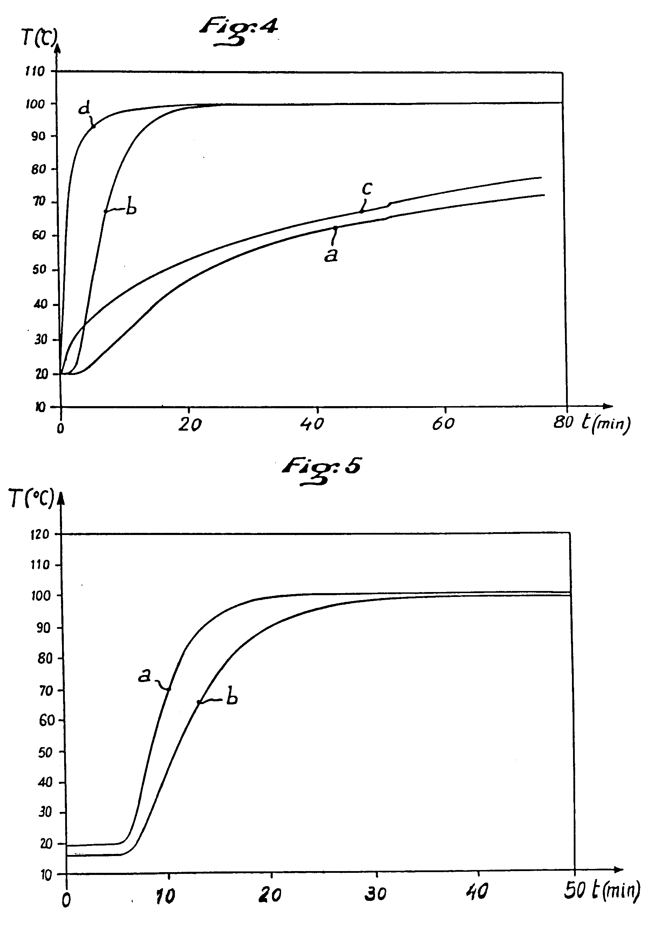

Les diagrammes des figures 4 à 9 illustrent l'influence de différents paramètres sur le temps de cuisson, ce temps t étant porté en abscisse, en minutes. Sur ces diagrammes la température T est portée en ordonnée, en degrés Celsius.

La figure 4 montre l'influence de la présence de vapeur dans l'enceinte pour la cuisson d'un cylindre de pomme de terre, pour une température de l'ambiance de l'enceinte (air ou vapeur) et des parois de 130°C. Les courbes a et b représentent respectivement l'évolution de la température au centre d'un cylindre de pomme de terre de diamètre de 33 milli

## TABLEAU I

### COMPARAISON DE QUELQUES EXEMPLES DES TEMPS DE CUISSON

| moyen de cuisson / genre d'aliment | four suivant l'invention | cocotte minute | four encastrable ou mini-four | four micro-ondes |
|---|---|---|---|---|
| Entrecôte | 2 mn | déconseillé | 10 mn | cuisson impossible |
| Marrons congelés | 6 mn | ... | ... | 17 mn |
| Carottes | 14 mn | 15 mn | ... | déconseillé par Picard ainsi que: haricots verts petits pois, poireaux artichaud .... |
| Pommes de terre | 15 - 16 mn | 15 mn | ... | |
| Pain | 9 mn | impossible | 15 mn | |
| Cake | 25 mn | impossible | 45 mn | décongélation seulement |
| Saucisses | 5 mn | ... | déconseillé | 4 mn |

mètres pour une longueur de 43 millimètres respectivement sans et avec vapeur dans le four. Les courbes c et d représentent respectivement l'évolution de la température en surface du cylindre de pomme de terre dans les mêmes conditions.

La figure 5 montre l'influence de la taille de l'échantillon pour la cuisson d'un cylindre de pomme de terre pour une température de vapeur et de parois de 130°C. Les courbes a et b représentent

9

respectivement l'evolution de la température au centre de deux cylindres de pomme de terre ayant pour dimensions respectives 34 et 43mm de diamètre pour 33 et 44mm de longueur.

La figure 6 montre l'influence de la température de la vapeur dans l'enceinte de cuisson sur la cuisson d'un cylindre de pomme de terre pour deux températures de vapeur de 130°C et 240°C, la température des parois étant régulée, dans chaque cas, à une température proche de celle de la vapeur. Les courbes a et b représentent respectivement l'évolution de la température au centre d'un cylindre de pomme de terre ayant pour dimensions 43mm de diamètre pour 48mm de longueur pour les deux températures citées. Les courbes c et c′ et d et d′ représentent respectivement l'évolution de la température de surface du même cylindre de pomme de terre aux mêmes conditions de cuisson. Les courbes c et d sont les températures de surface sur le côté du cylindre, et les courbes c′ et d′ sont les températures de surface sur le dessus du cylindre.

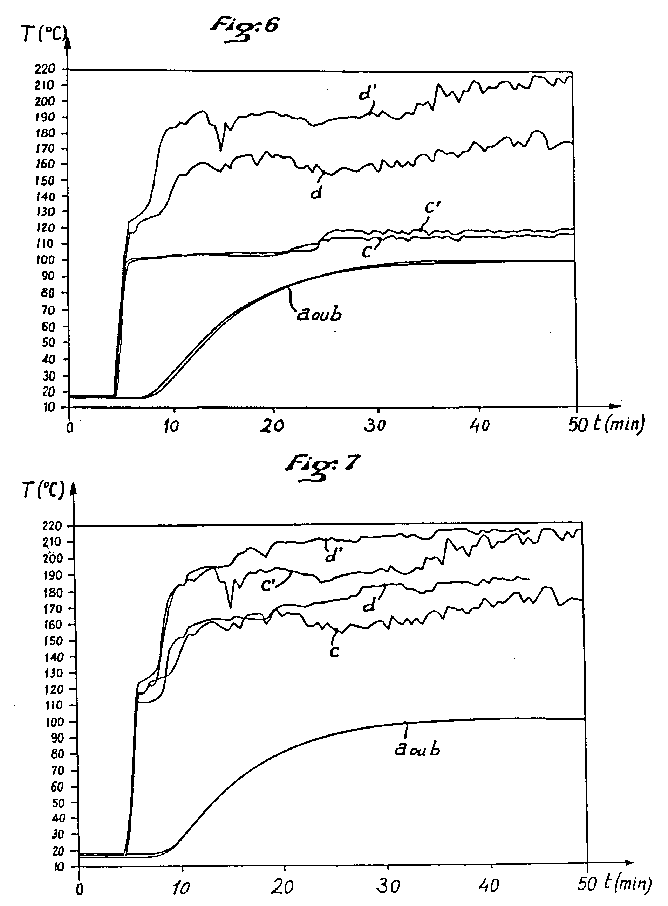

La figure 7 montre l'influence du débit de vapeur sur la cuisson d'un cylindre de pomme de terre, pour une température de vapeur de 240°C et deux débits de vapeur de 790 et 1180 grammes/heure, la température des parois étant régulée à une température proche de celle de la vapeur. Les courbes a et b représentent respectivement l'évolution de la température au centre d'un cylindre de pomme de terre ayant pour dimensions 43mm de diamètre pour 48mm de longueur pour les deux débits cités. Les courbes c et d et les courbes c′ et d′ représentent respectivement l'évolution de la température de surface du même cylindre de pomme de terre aux mêmes conditions de cuisson. Les courbes c et d sont les températures de surface sur le côté du cylindre, et les courbes c′ et d′ sont les températures de surface sur le dessus du cylindre.

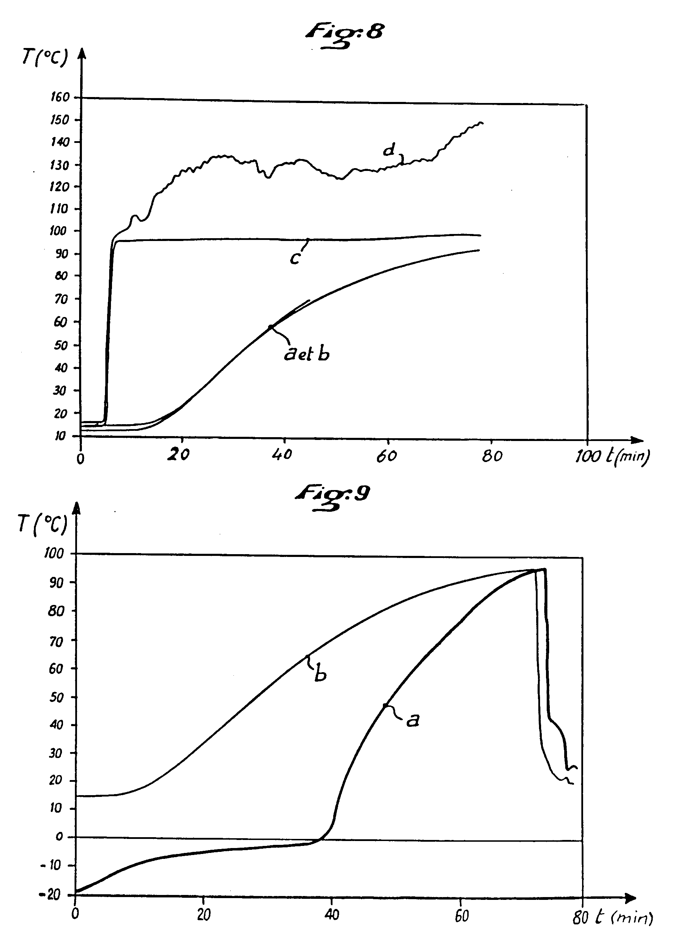

La figure 8 montre l'influence de la température de la vapeur sur la cuisson d'un rôti de porc frais d'environ 500g pour deux températures de vapeur de 130°C et 240°C, la température des parois étant régulée dans chaque cas à une température proche de celle de la vapeur. Les courbes a et b représentent, respectivement, l'évolution de la température au centre d'un rôti de porc ayant pour dimensions 60/100 mm de diamètre pour 100mm de longueur, pour les deux températures citées. Les courbes c et d représentent, respectivement, l'évolution de la température de surface du même rôti de porc en haut du cylindre qu'il forme aux mêmes conditions de cuisson.

La figure 9 montre l'influence de la congélation d'un rôti de porc d'environ 500g sur la cuisson à la température de la vapeur de 240°C. Les courbes a et b représentent respectivement l'évolution de la température au centre d'un rôti de porc congelé et frais ayant pour dimensions 60/100mm de diamètre pour 100mm de longueur pour les deux températures citées.

Les résultats chiffrés correspondant aux courbes sont donnés dans le tableau comparatif II de la page suivante des résultats de cuisson en fonction des différentes conditions de cuisson.

Ces résultats permettent d'établir les conclusions suivantes :

Quelle que soit la nature de l'aliment (légumes ou viande, frais ou congelé) les phénomènes physiques qui régissent la cuisson sont les mêmes.

Le volume de l'échantillon a une influence prépondérante sur la température interne du produit; à volume égal la surface et surtout la distance au centre deviennent les paramètres importants.

Pour des échantillons en tous points identiques (nature, forme, volume), la température de la vapeur dans l'enceinte de cuisson n'a pas d'influence sur l'évolution de la température interne du produit.

La température de la vapeur dans l'enceinte de cuisson a une grande influence sur l'évolution de la température de surface du produit; c'est cette température qui détermine l'aspect doré ou non de cette surface. A température de vapeur égale, l'augmentation du débit de vapeur permet d'augmenter la température de surface de l'aliment et donc la vitesse de séchage de celle-ci. On constate donc que le choix de la température de cuisson n'intervient qu'en fonction de l'état de surface que l'on désire obtenir. Par ailleurs, on constate que l'aspect doré des aliments ne s'obtient qu'après l'assèchement de la surface.

Comme le volume du produit à cuire influence fortement

## TABLEAU II

### COMPARAISON DES RESULTATS DE CUISSON
### EN FONCTION DE DIFFERENTES CONDITIONS DE CUISSON

TEMPS DE CUISSON DE CYLINDRES D'ALIMENT

| DIMENSIONS DU CYLINDRE DIAMETRE (cm) | LONGUEUR | | CONDITIONS DE CUISSON VAPEUR (g/h) | TEMPERATURE (°C) | TEMPERATURE DU PRODUIT A COEUR (°C) | SURFACE | TEMPS DE CUISSON A COEUR (minutes) | PERTE EN POIDS (%)/M. INIT. |
|---|---|---|---|---|---|---|---|---|
| 34 | 33 | | sans | 130 | 60 | 63 | 37 | |
| | | | avec 790 | 130 | 60 | 100 | 7 | |
| | | | | | 80 | 100 | 10 | |
| | | | | | 100 | 100 | 23 | |
| 43 | 48 | | avec 790 | 130 | 60 | 100 | 10 | |
| | | | | | 80 | 100 | 16 | |
| | | | | | 100 | 100 | 33 | 7 après 80 mn |
| | | | avec 790 | 240 | 60 | 180 | 10 | |
| | | | | | 80 | 180 | 16 | |
| | | | | | 100 | 180 | 33 | 21 après 90 mn |
| | | | avec 1180 | 240 | 60 | 180 | 10 | |
| | | | | | 80 | 185 | 16 | |
| | | | | | 100 | 200 | 33 | 28 après 44 mn |
| 60/100 | 100 | frais | avec 790 | 130 | 95 | 100 | 70 | 25 après 80 mn |
| | | | avec 790 | 240 | 95 | 120 | 70 | 34 après 80 mn |
| 77/90 | 113 | congelé | avec 790 | 130 | 95 | | 80 | 36 après 80 mn |
| | | | avec 790 | 240 | 95 | 100 | 80 | 38 après 80 mn |

(Colonne gauche : POMME DE TERRE ; ROTI DE PORC)

l'évolution de la température à coeur de celui-ci, si on utilise la même température de cuisson pour deux échantillons de volume différent, on risque que la surface de l'échantillon le plus gros soit plus desséchée, et par conséquent que la qualité du produit cuit soit moins bonne. Or, comme on a constaté qu'à volume égal la température de vapeur n'a pas d'influence sur le temps de cuisson, il reste à adapter cette température de vapeur en fonction du volume des échantillons pour obtenir des cuissons similaires. La subtilité réside dans la détermination de la nature de l'état de surface désiré par le consommateur.

En conclusion, il apparaît que la cuisson des aliments à la vapeur peut être réalisée à basse température pendant un certain temps puis, si l'on désire obtenir un état de surface doré, il faut augmenter la température de la vapeur de telle façon que la diffusion de l'eau vers la surface soit largement compensée par l'évaporation de celle-ci. Ce nouveau mode de cuisson présente de nombreux avantages :

- Possibilité d'adapter les conditions de la cuisson en fonction des paramètres physiques de l'échantillon (nature, volume, surface, humidité) pour obtenir une qualité constante.
- Par le contrôle de la différence de température entre le coeur et la surface de l'aliment, il est possible d'agir sur les réglages du four (température en sortie du surchauffeur, température des parois, débit de vapeur) pour obtenir l'état de surface désiré au moment voulu; l'aliment ne subit plus les conditions de cuisson, il les dirige en fonction de ses caractéristiques.
- Economie d'énergie due à l'utilisation d'une température basse dans la majeure partie de la cuisson.
- Economie de matière par diminution de la perte en poids limitée à la formation de la croûte qui ne dépend plus du temps total de cuisson.
- Dans certaines cuissons, notamment dans les cuissons à coeur de rôtis par exemple, il est possible de se passer du préchauffage du four puisque, du fait de l'utilisation de la vapeur, il est possible d'atteindre très rapidement 100°C, le transitoire du générateur de vapeur étant très court. Parallèlement, le chauffage des parois et du surchauffeur permettent d'annuler la condensation de la vapeur sur les parois.
- Modification rapide des conditons de cuisson par optimisation de l'inertie du système. L'utilisation d'un générateur de vapeur, à corps poreux, est un des gros avantages du procédé car il permet des transitoires très courts et une régulation facile du débit de vapeur.

Ces résulats de l'invention peuvent être obtenus par la conception de dispositifs de toutes formes appropriées aux buts recherchés, fonctionnant à la pression atmosphérique pour de la vapeur d'eau avec des mélanges, ou non, d'air ambiant ou de tout autre gaz inerte, lorsque la cuisson doit intervenir à une température inférieure à 100°C.

Le dispositif d'élévation de la température de vapeur peut être localisé, par exemple, à l'intérieur d'une enceinte de cuisson, entretenue en température, ou être intégrée à celle-ci, partiellement ou totalement, ou bien encore, ce dispositif peut être, par lui-même, une enceinte de cuisson ou bien encore une centrale de vapeur distribuant une ou plusieurs températures de vapeur.

Pour obtenir l'élévation de la température de la vapeur d'eau, on peut utiliser toutes sortes d'énergies, par exemple, l'électricité, ou encore, par exemple, des gaz de combustion. De même, on peut utiliser, pour alimenter le dispositif élévateur de la température de vapeur, toutes sortes de générateurs de vapeur produisant celle-ci avec toutes sortes d'énergies.

Pour effectuer le transfert de l'énergie utilisée afin d'élever la température de la vapeur et de ses mélanges éventuels, on peut localiser l'élément chauffant, tel que la résistance 22, partiellement ou en totalité, dans la longueur du conduit de vapeur 19,21,29, directement dans la section de passage du flux de vapeur, ou bien, par exemple, l'élément chauffant peut faire partie intégrante de la paroi du conduit, ou bien encore, l'élément chauffant peut être placé sur la face externe du conduit de vapeur.

L'élément chauffant peut être, par exemple, un fil nu, une résistance blindée ou un tube à quartz, ou bien encore une paroi conduisant la chaleur de combustion d'un gaz, ou encore une source de rayonnement thermique.

Le conduit de vapeur peut être, par exemple, de section circulaire, carrée ou autre, cette section étant en rapport avec la longueur en fonction du débit recherché et de la configuration nécessaire. Ce conduit de vapeur peut être localisé entre deux pièces cylindriques, ou d'une autre forme appropriée, entre lesquelles circule la vapeur. On peut prévoir, par exemple, une enceinte de cuisson à double paroi dont l'une, ou les deux, sont chauffées à la température requise. Ce conduit de vapeur peut être percé d'un ou de plusieurs trous, tant pour la vapeur entrant que pour celle sortant, élevée en température, de façon que l'on puisse obtenir, s'il y a lieu, une légère surpression lorsque l'on désire que la vapeur atteigne directement l'aliment à cuire ou à réchauffer. Le conduit de vapeur peut être également un diffuseur de vapeur. Dans ce cas, il peut être équipé d'un élément chauffant, sur tout ou partie de sa surface, ou à l'intérieur en devenant ainsi un dispositif où sont groupées deux fonctions en une seule. Egalement, l'appareil peut avoir plusieurs dérivations, chacune d'elles pouvant être chauffée localement ou en continuité.

Pour mieux comprendre les possibilités de l'invention dans les divers domaines d'application précités, et pour qu'elle soit adaptée spécifiquement à des fonctions, à des dimensions et formes appropriées, à l'obtention d'un maximum d'efficacité tant sur le plan énergétique que sur celui des temps, températures et qualités de cuisson requises, on décrira ci-après quelques exemples non limitatifs de conception et d'adaptation de l'invention à des appareils dont les fonctions d'utilisation sont connues dans divers secteurs du marché.

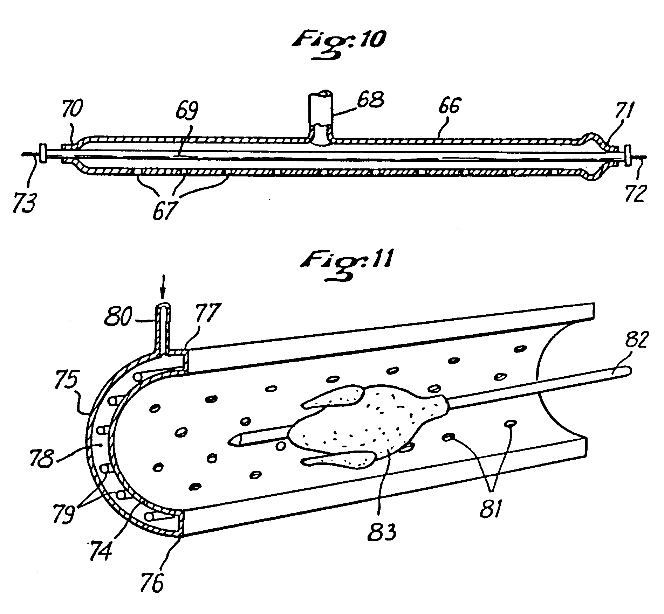

Dans le domaine du commerce, des services et devant l'étalage des boucheries ou charcuteries, on trouve des appareils, utilisés pour la cuisson des poulets à la broche, composés de plusieurs étages. Ces poulets sont, la plupart du temps, en rotation exposés au rayonnement infrarouge, par exemple, de plusieurs tubes à quartz. Dans cet exemple de réalisation, on peut remplacer avantageusement ces tubes à quartz par différents modes de réalisation de l'invention. Par exemple, le diffuseur de vapeur peut être un simple tube percé de trous permettant que la vapeur soit projetée directement sur la surface des poulets, pendant que ceux-ci sont en rotation , et ainsi conçu, il peut être mis à la même place que les tubes à quartz. Un tel diffuseur, qui est représenté sur la figure 10, est constitué d'un tube en acier inoxydable 66, percé de trous 67, auquel est soudé un tube 68 d'arrivée de la vapeur. Dans l'axe du tube 66 s'étend une résistance électrique 69 du type blindé dont chacune des extrémités est soudée aux deux extrémités 70,71 du tube 66 et dont les bornes externes 72,73 sont reliées à la source de courant électrique.

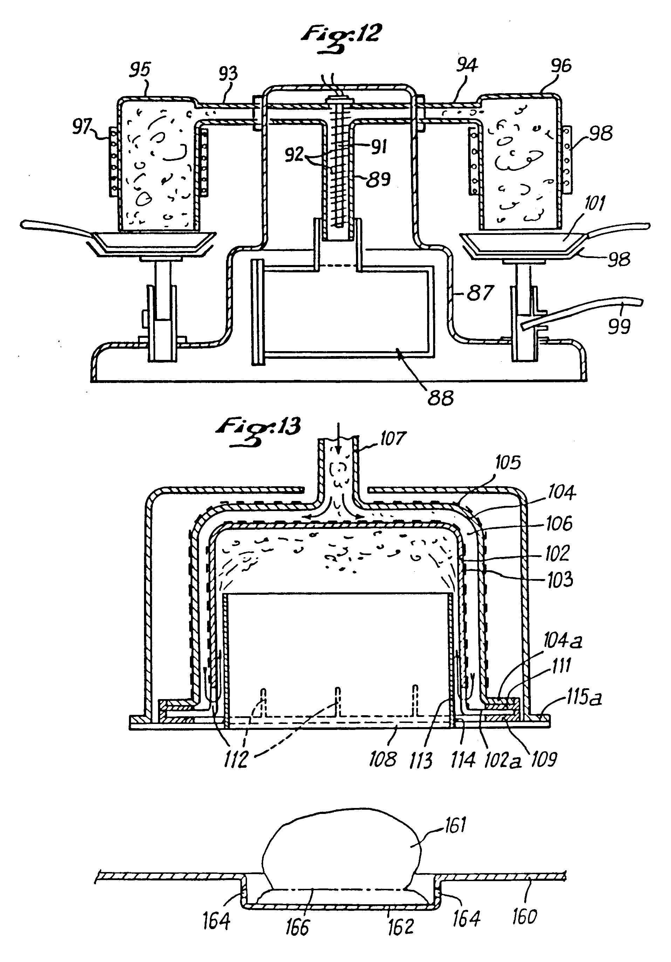

Dans la variante d'exécution représentée sur la figure 11, le diffuseur de vapeur est constitué de deux demi-coquilles semi-cylindriques coaxiales 74,75 réunies et soudées l'une à l'autre, à leurs extrémités, par des parties d'équerre 76,77 en formant ainsi un caisson semi-cylindrique. Dans l'espace interne 78 de ce caisson semi-cylindrique sont logées plusieurs résistances 79 du type blindé, s'étendant longitudinalement. Dans cet espace débouche un tube 80 d'alimentation en vapeur et cette vapeur ressort du caisson en passant à travers une série de trous 81 percés dans la demicoquille interne 74. Sur une broche 82, qui s'étend sensiblement suivant l'axe des deux demi-coquilles semicylindriques 74,75, est installé un poulet à rotir 83 qui peut ainsi tourner régulièrement à distance de la demi-coquille interne 74, en étant cuit progressivement par la vapeur sortant des trous 81. Pour augmenter la rapidité du chauffage ou diminuer la consommation d'énergie on peut prévoir, de l'autre côté du caisson semi-cylindrique constitué par les demi-coquilles 74,75, un autre caisson similaire disposé de manière à enfermer totalement le poulet 83. Dans le cas des trois exemples de réalisation précités, ces genres de diffuseurs peuvent être alimentés en vapeur par une centrale d'élévation de la température, ou bien on peut équiper chaque genre de rampe décrite d'éléments chauffants et pouvoir ainsi programmer, par exemple, un cycle de pré-chauffage sur une ou plusieurs rampes suivant le besoin du débit demandé. Suivant la qualité recherchée, on peut jouer sur le débit de vapeur en relation avec la température de celle-ci. De même, lorsque la rampe de diffuseur de vapeur est équipée d'un élément chauffant on peut programmer la qualité recherchée en combinant température et débit de vapeur.Pour tous ces cas de conception on peut réaliser des appareils d'une épaisseur beaucoup moins importante du fait de la possibilité de placer la source de vapeur à proximité immédiate de la surface des poulets à cuire.

Toujours dans ce domaine des services du commerce de détail, on trouve à l'étalage des boulangeries ou pâtisseries des fours cuisant de la biscuiterie, par exemple, pour cuire, à partir de pâtes préparées, des croissants, des petits pains au chocolat, des chaussons aux pommes, etc...Ces fours sont en général à air pulsé provenant d'une petite centrale équipée d'une résistance et d'un ventilateur. Egalement on peut améliorer ces appareils en les équipant suivant l'invention, en situant les diffuseurs de vapeur par étage ou bien en utilisant une centrale d'élévation de la température de vapeur. Si on utilise, par étage, des diffuseurs de vapeur équipés respectivement d'éléments chauffants, on peut, dans ce cas, fournir des températures adaptées aux genres de produits à cuire dans toute la gamme proposée, amenant ainsi un bien meilleur service à la clientèle, et réaliser des économies ainsi qu'obtenir un plus grand débit par appareil. Toujours dans ce même domaine des services à la clientèle, dans les bars, pour cuire ou réchauffer, par exemple, des saucisses chaudes ou des pizzas, on utilise des enceintes équipées de tubes infra-rouge, ou bien des fours micro-ondes. Dans le premier cas, les cuissons sont relativement longues et dans le second la qualité est décevante. On peut également améliorer, pour ces genres d'appareils, le service par l'utilisation de l'invention, en s'inspirant des différents dispositifs décrits précédemment.

Dans le domaine ménager grand public, on peut également utiliser l'invention pour des appareils dont des fonctions sont connues, par exemple pour effectuer une fondue bourguignonne, dont le principe est de cuire des morceaux de viande dans de l'huile chaude ou bouillante. Dans ce cas,on peut avantageusement remplacer cette huile chaude par l'exposition de la viande à une température de vapeur, par exemple à 250°C. La figure 12 représente une forme d'exécution d'un appareil permettant ce genre de cuisson. Cet appareil comprend un corps 87 dans lequel se trouve un générateur de vapeur 88 qui alimente un dispositif 89 suivant l'invention, lequel comporte une résistance 91 équipée d'ailettes de diffusion 92. Ce dispositif dessert la vapeur, élevée en température, dans des tubes 93,94, qui aboutissent à deux enceintes de cuisson 95,96 équipées respectivement de colliers chauffants 97,98 et faisant partie de postes de cuisson respectifs. L'appareil représenté sur la figure 12 comporte autant de postes de cuisson qu'on le désire, chacun de ces postes comprenant, à sa partie supérieure, une enceinte de cuisson telle que les enceintes 95,96. Il comprend également, à sa partie inférieure, un plateau horizontal 98, qui peut être abaissé ou soulevé au moyen d'un levier 99, et sur lequel peut être placé un plat 101, pourvu de son manche, plat dans lequel est placé le morceau de viande à cuire. Contrairement aux appareils à huile chaude, où la température de celle-ci baisse rapidement, dans le cas de l'utilisation de l'invention la température de vapeur n'est pas influencée par l'environnement de la viande. Par la réalisation d'orifices en verre, on peut voir évoluer l'aspect des viandes et, suivant le désir du convive, en équipant une partie de la surface des tubes de distribution de vapeur d'un élément chauffant indépendant, chaque convive peut régler la température de vapeur suivant le but recherché, par un réglage, par exemple, de dispositifs électroniques.

Dans ce même domaine ménager, on peut également réaliser le même genre de produit pour des fondues de fromage en s'inspirant de ce genre de conception de la fondue bourguignonne, les nacelles pouvant devenir des récipients adaptés au volume désiré de la cuisson.

Egalement, dans ce domaine ménager, compte tenu du fait que la vapeur sortant est à température modérée, au regard du rayonnement d'une résistance électrique, on peut réaliser des minifours extra-plats destinés plus particulièrement aux plats préparés que l'on trouve, par exemple, en surgelé. Par exemple, la hauteur pourrait être de 10cm, et les autres dimensions voisines du maximum parmi tous ces genres de produits. Sur le côté, on pourrait loger le générateur de vapeur et tout le système de commande du four. Suivant les prix visés, on peut amener la vapeur à la fois à la partie basse et à la partie haute en employant des diffuseurs de vapeur, ou seulement de simples orifices. L'enceinte, en ellemême, serait équipée d'un élément chauffant et programmée en température. En plus du réchauffage des plats tout préparés, on peut également cuire des croissants avec la pâte toute préparée, ou une autre pâtisserie et également cuire des viandes.

Un autre avantage de l'invention peut être apporté au four micro-onde. En effet, la plupart de ceux-ci ont une partie de leur enceinte en matière plastique. Pour les améliorer, compte tenu que cette matière peut tenir à une température relativement élevée, on peut utiliser l'invention afin d'élargir la gamme des possibilités de l'appareil. De même l'invention peut améliorer les possibilités des cocottes minutes ainsi que, par exemple, des fours encastrables.

Dans le domaine de la cuisson industrielle, par exemple, sur des lignes de fabrication ou dans des fours, on peut utiliser le couplage du diffuseur de vapeur et de son élément chauffant, par exemple pour la cuisson du pain. Dans ce cas, on réalise un dispositif de forme correspondant à celle du pain, ou d'un groupe de pains, et dont l'enceinte est à double paroi, dont une est percée de trous de sortie de vapeur localisés de telle façon que l'on puisse avoir des nuances de couleur de cuisson à différents endroits de la surface. Comme dans les exemples précédents, on peut programmer les cuissons suivant les aspects et qualités désirés.

Dans le domaine industriel, par exemple pour la cuisson des jambons qui est une opération relativement longue, on peut réaliser des enceintes de cuisson ayant la dimension d'un jambon ou de groupes de jambons. La figure 13 représente un exemple de réalisation d'un appareil conçu à cet effet et qui comprend une enceinte de cuisson interne 102, en forme de cloche, qui est équipée, sur sa surface externe, d'un élément de chauffage électrique 103 (résistance). Cette enceinte de cuisson interne 102 est coiffée, à une certaine distance, par une autre enceinte externe 104, qui porte, sur sa surface externe, une résistance électrique chauffante 105. Les deux enceintes 102 et 104 délimitent ainsi, entre elles, un conduit 106 qui communique avec un conduit 107 d'alimentation en vapeur. Ce conduit 107 débouche dans la face horizontale supérieure de l'enceinte externe 104. Par ailleurs l'appareil comporte une embase 108 qui est pourvue d'un joint d'étanchéité 109, interposé entre l'embase 108 et une collerette externe inférieure 102a, faisant partie de l'enceinte interne de cuisson 102. Cette collerette est également pourvue, à son tour, à sa périphérie, d'un joint d'étanchéité 111 sur lequel repose une collerette externe inférieure 104a faisant partie de l'enceinte externe 104. La paroi latérale de l'enceinte interne de cuisson 102 est pourvue de saignées verticales 112 pour le passage de la vapeur. A l'intérieur de la partie inférieure de l'enceinte de cuisson interne 102 s'étend une paroi cylindrique 113 qui est soudée, à l'endroit d'un cordon de soudure 114, à l'embase 108 qui présente une ouverture centrale à laquelle se raccorde la paroi 113. Enfin, une enveloppe externe, en forme de cloche, entoure l'enceinte externe 104, pour assurer l'isolation thermique, elle repose sur l'embase 108, par une collerette externe inférieure 115a, et sa paroi horizontale supérieure est traversée par le tube d'arrivée de vapeur 107.

La vapeur parvenant dans l'appareil par le tube vertical supérieur 107 s'écoule suivant un trajet indiqué par les flèches sur la figure 13. Cette vapeur s'écoule d'abord horizontalement, puis verticalement vers le bas, dans le conduit formé entre les deux enceintes 102 et 104. Au cours de cet écoulement la vapeur est chauffée, par son contact avec les parois des deux enceintes 102,104, qui sont respectivement chauffées par les résistances 103,105. Alors qu'elle parvient à la partie inférieure du conduit 106, la vapeur passe à travers les saignées 112, dans l'espace annulaire compris entre la paroi latérale de l'enceinte interne de cuisson 102 et la paroi cylindrique 109, elle remonte dans cet espace annulaire pour se répandre au

14

sommet de l'enceinte de cuisson 102. Si, dans cet exemple de réalisation, la paroi 113 dirige le flux de vapeur vers le sommet de l'enceinte de cuisson 102, on peut concevoir, suivant une variante d'exécution, une autre forme d'enceinte de cuisson percée de trous sur toute sa surface. On peut ainsi diriger, par légère surpression, la vapeur directement sur toute la surface.

Dans le domaine de la restauration un des avantages, parmi d'autres, de l'invention est que l'on peut réaliser un seul et même four remplissant plusieurs fonctions, par l'utilisation d'un diffuseur de vapeur équipé, ou non, d'un élément chauffant, qui distribue et répartit la vapeur à différentes températures suivant les genres de cuisson à effectuer, par étage, et pour chaque étage. Par cet agencement, on obtient un four polyvalent programmable suivant les lieux et les genres de produits à cuire, les positions d'attente de cuisson ou de réchauffage, ou encore, de dorure, par les réglages des températures et débits de vapeur suivant encore la nature et la qualité des produits désirés par la clientèle. Par ces possibilités, on peut réaliser toute une gamme de fours de toutes puissances et dimensions pouvant être adaptés, de la petite à la grande restauration.

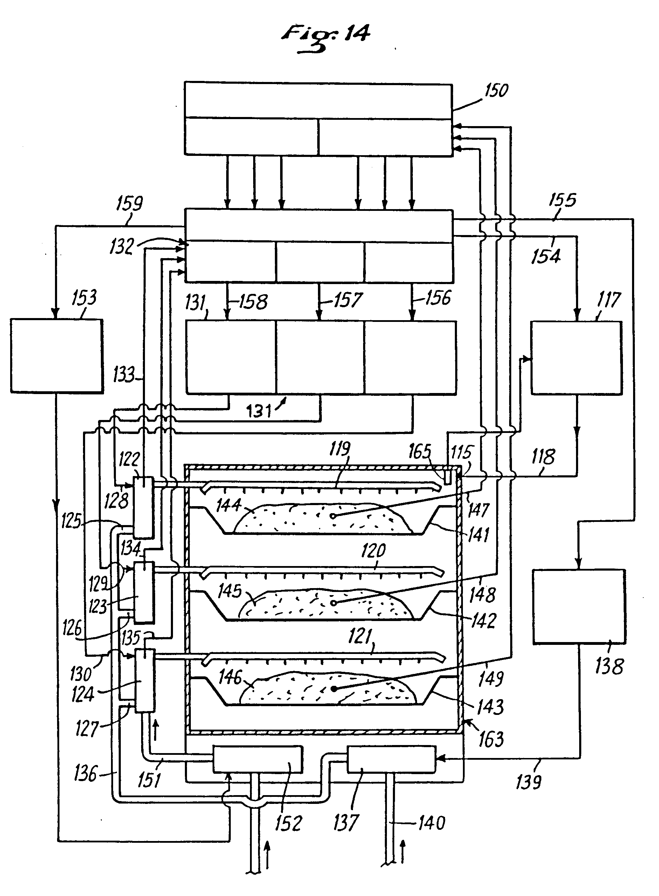

Sur la figure 14 est schématisé un four de cuisson 163, dont l'enceinte est équipée d'une résistance chauffante 115 et entretenue à température constante par une sonde de température 165, qui commande une source d'alimentation électrique 117, pour alimenter, par une connexion 118, la résistance chauffante 115. Dans l'enceinte du four 163 sont disposés trois diffuseurs de vapeur 119,120,121, alimentés respectivement par trois dispositifs d'élévation de la température de vapeur 122,123, 124, alimentés eux-mêmes en vapeur d'eau par des tubes 125,126,127. Chacun de ces dispositifs 122,123,124 est équipé d'une résistance chauffante alimentée en énergie électrique par des connexions 128,129,130, que commande un dispositif 131 asservi par un dispositif 132 de programmation, pilotage, asservissement, lequel reçoit les connexions de sondes de températures 133,134,135, relevant respectivement la température de la vapeur dans les trois dispositifs élévateurs de température 122,123,124. Chacun de ces dispositifs élévateurs de température 122,123,124 est alimenté en vapeur par un tube 136 en provenance d'un générateur de vapeur 137, piloté en courant électrique par un appareil d'asservissement 138, par l'intermédiaire d'une connexion 139, et alimenté en eau par un tuyau 140. Dans l'enceinte du four de cuisson 114 sont disposés trois plats 141,142,143, qui reçoivent des aliments à cuire respectifs 144,145,146, dont chacun possède une sonde de température respective 147,148,149, ces sondes étant reliées à un dispositif de commande de pilotage 150. Dans cet exemple de réalisation, le diffuseur de vapeur 121, situé à la partie base de l'enceinte, reçoit un mélange de vapeur d'eau et de gaz, ou d'air, en provenance du dispositif d'élévation de température 124, qui est équipé d'une arrivée 151 alimentée par un générateur de gaz ou d'air 152, dont le débit est asservi par un dispositif 153. Ainsi conçu, l'aliment à cuire 146 peut recevoir le mélange de vapeur d'eau et de gaz ou d'air de telle façon que l'on peut cuire les aliments à des températures inférieures à 100°C.

L'installation ainsi conçue permet, par le dispositif 150, d'imposer un cycle manuel ou piloté par les sondes 147,148 et 149, mesurant respectivement les températures au sein des différents aliments. Si l'on désire effectuer des cuissons en commande manuelle, on affiche, au moyen du dispositif 132, la programmation-pilotage, la température désirée dans l'enceinte pour commander, par une connexion 154, le dispositif d'asservissement de chauffage de l'enceinte 117, le débit de vapeur d'eau pour commander, par une connexion 155, le dispositif d'asservissement 138, les températures désirées de la vapeur d'eau fournie par les dispositifs élévateurs de température 122,123,124, pour commander, par des connexions 156,157,158, le dispositif d'asservissement 131, et enfin, le débit de gaz pour commander, par une connexion 159, le dispositif d'asservissement du générateur de gaz ou d'air 152.

Si l'on désire effectuer des cuissons en commande automatique, ce sont les sondes de températures 147,148,149, logées dans les aliments respectifs qui imposeront, par rapport à une sélection de programmation suivant le genre d'aliments à cuire, l'asservissement du dispositif 117 qui alimente le chauffage des parois de l'enceinte, le générateur de vapeur 137, le dispositif 131 d'asservissement du chauffage des conduits de vapeur, et le dispositif 153 d'asservissement du débit du gaz.

Si dans ce dernier exemple on n'utilise qu'une seule sonde de température 147,148,149, logée à coeur, dans l'aliment et que l'on veut, par exemple, créer une recette particulière et reproductible, on peut loger une seconde sonde de température à l'intérieur, et près de la surface de l'aliment, qui déclenchera, par la sélection de programmation 131, le cycle de dorure de l'aliment par l'élévation de la température de vapeur.

Les différents exemples du dispositif cités ci-avant montrent que la conception de celui-ci peut différer quelque peu suivant son aptitude à la fonction ; c'est-à-dire que pour satisfaire toutes sortes de cuisson, on peut réaliser soit un appareil polyvalent soit un appareil spécifique à l'aliment et à la cuisson désirée pour celui-ci.

Par ces différents dispositifs, on peut avantageusement obtenir une gamme de températures de 50 à 300°C, de manière à satisfaire soit des cuissons délicates à basse température, telles que par exemple,

EP 0 335 796 B1

celle des entremets sucrés ou des légumes de printemps, soit des saisies rapides, à température relativement haute, ou bien encore une combinaison des deux, lorsque l'on veut préserver certaines qualités du produit ou obtenir un traitement particulier. Dans tous les cas, il est possible de gérer tous les différents types de cuisson soit manuellement, soit par programmation pré-établie par le constructeur, soit par programmation déterminée par l'utilisateur avant ou en cours de cuisson ou soit encore par contrôle de la température de l'aliment lui-même qui déterminera les conditions de cuisson idéales en fonction des critères de qualité et de cuisson indiqués par l'utilisateur.

Dans tous les types de cuisson on retrouve deux impératifs principaux qui sont d'atteindre la température à coeur, et d'obtenir un état de surface désiré. Dans le cadre de l'optimisation de la cuisson, le but est de concilier les deux impératifs tout en minimisant les pertes en qualité de l'aliment (perte en eau par exemple). En effet, dans certains cas, rôtis par exemple, pour obtenir un état de surface acceptable, caractérisé par l'épaisseur et la couleur de la croûte, il est souvent nécessaire d'augmenter la température du four : de ce fait on accélére considérablement les pertes par évaporation sans pour autant diminuer le temps de cuisson. Comme le plus souvent le temps de montée en température est supérieur au temps de formation de l'état de surface, on peut envisager la conduite de la cuisson suivante : une première phase de cuisson à température de four basse, comprise de préférence entre 100°C et 130°C, dans le but de cuire l'aliment en minimisant les pertes par évaporation, puis une seconde phase de cuisson, à température élevée, de préférence supérieure à 200°C, dans le but d'achever la cuisson de l'aliment et de favoriser la formation de la croûte.

Le but de la programmation est de déterminer, soit à l'avance soit en cours de cuisson, le moment opportun pour opérer le passage de la première à la deuxième phase de cuisson qui est déterminé de façon à obtenir, simultanément en fin de cuisson, la température à coeur et l'état de surface désiré et ce, en minimisant les pertes en qualité de l'aliment en fonction de ses caractéristiques physiques, telles que par exemple volume, surface, poids et humidité initiale par exemple. Ces deux phases de cuisson sont caractérisées par des conditions de réglage des paramètres de fonctionnement du four qui sont la température de la vapeur, la température des parois de l'enceinte réglée préférentiellement proche de la température de la vapeur et enfin le débit de vapeur. Le débit de vapeur doit être, dans la première phase, d'autant plus grand que le temps d'assèchement est court et dans la seconde phase ce débit est plus faible.

Par ailleurs, on peut également programmer température et débit de vapeur pour le nettoyage du four, après la fin des cuissons. De même, pour abaisser rapidement la température des parois du four on peut faire arriver un arrosage d'eau fraiche sur les parois.

**Revendications**

1. Procédé de cuisson ou de réchauffage d'un aliment à l'intérieur d'une enceinte (3, 95, 96, 102, 114) à la pression atmosphérique, dans lequel on produit de la vapeur d'eau, on surchauffe cette vapeur d'eau, et on l'introduit dans l'enceinte, caractérisé en ce qu il comporte les étapes consistant à porter les parois de l'enceinte (3, 95, 96, 102, 114), à une température au moins égale à la température d'ébullition de l'eau à la pression atmosphérique, à projeter sur l'aliment ladite vapeur d'eau surchauffée, pour le soumettre à un traitement thermique pouvant comporter plusieurs phases, les conditions de température de vapeur d'eau, de température de parois de l'enceinte, et de débit de vapeur étant soit définies au cours du traitement, en fonction de la différence de température entre le coeur et la surface de l'aliment pour la cuisson désirée, soit prédéfinies par un mode opératoire ou une recette de cuisson établie lors d'essai antérieurs.

2. Procédé suivant la revendication 1 caractérisé en ce qu'on l'on réalise tout ou partie du traitement thermique à la vapeur de l'aliment, à une basse température comprise, de préférence, entre 100°C et 130°C.

3. Procédé suivant l'une quelconque des revendications 1 et 2 caractérisé en ce que l'on peut réaliser ou poursuivre le traitement thermique précédent, dans une gamme de température comprise, de préférence, entre 130°C et 300°C, en fonction des caractéristiques physiques de la substance alimentaire à traiter et de l'état de surface désiré.

4. Procédé suivant la revendication 1 caractérisé en ce que, pour obtenir des températures de cuisson inférieures à 100°C, on mélange de l'air ou bien tout autre gaz, avec de la vapeur pour les substances thermo-sensibles.

16

**5.** Procédé suivant l'une quelconque des revendications précédentes caractérisé en ce que l'on réalise tout ou partie du traitement thermique de l'aliment par un débit de vapeur compris de préférence entre 10% et 100% du débit normal d'un générateur de vapeur.

**6.** Procédé suivant l'une quelconque des revendications précédentes caractérisé en ce que l'on réalise tout ou partie du traitement thermique de l'aliment en entretenant, de préférence, la température de paroi de l'enceinte voisine de celle de la vapeur.

**7.** Appareil de cuisson, ou de réchauffage d'un aliment, à la vapeur d'eau dans une enceinte (3, 95, 96, 102, 114) à la pression atmosphérique, comprenant des moyens de production de vapeur d'eau (1), des moyens assurant le surchauffage (2) de la vapeur d'eau avant son introduction dans l'enceinte (3, 95, 96, 102, 114), des moyens distributeurs, ou diffuseurs (4), de cette vapeur d'eau surchauffée, dans l'enceinte, et des moyens (6,7) pour contrôler la température de la vapeur sortant des moyens diffuseurs (4), caractérisé en ce que lesdits moyens diffuseurs (4) de la vapeur d'eau surchauffée débouchent en regard et à proximité immédiate de l'aliment, et en ce qu'il comprend des moyens de chauffage des parois de l'enceinte (3, 95, 96, 102, 114) à une température au moins égale à la température d'ébullition de l'eau à la pression atmosphérique, et des moyens (6,7) pour contrôler le débit de vapeur sortant du diffuseur (4).

**8.** Appareil suivant la revendication 7 caractérisé en ce qu'il comporte des moyens (5) de régulation de la température des parois de l'enceinte (3), et le diffuseur de vapeur (4) est relié au générateur de vapeur (1) par un tube (21) passant à travers le dispositif surchauffeur pourvu de moyens de chauffage (22).

**9.** Appareil suivant la revendication 8 caractérisé en ce que les moyens de chauffage (22) des moyens de surchauffage de la vapeur d'eau sont constitués d'une résistance, enroulée en hélice autour du tube (21), ou à l'intérieur de celui-ci, traversé par la vapeur produite par le générateur de vapeur (1), et la température de la vapeur est contrôlée par une sonde (36) placée dans un tube (29) s'étendant entre les moyens de surchauffage et le diffuseur de vapeur (4), cette sonde (36) étant reliée aux moyens (6) contrôlant la température de la vapeur sortant du diffuseur.

**10.** Appareil suivant l'une quelconque des revendications 7 à 9 caractérisé en ce que le diffuseur de vapeur (66-68; 74,75) contient un élément chauffant (69,79) assurant le surchauffage de la vapeur.

**11.** Appareil suivant la revendication 10 caractérisé en ce que le diffuseur de vapeur est constitué d'un tube en acier inoxydable (66) percé de trous (67) et auquel est soudé un tube (68) d'arrivée de la vapeur et, dans l'axe du tube (66), s'étend une résistance électrique (69) dont les deux extrémités sont respectivement soudées aux deux extrémités (70,71) du tube (66) et dont les bornes externes (72,73) sont reliées à la source de courant électrique.

**12.** Appareil suivant la revendication 10 caractérisé en ce que le diffuseur de vapeur est constitué de deux demi-coquilles semi-cylindriques coaxiales (74,75) réunies et soudées l'une à l'autre, en formant ainsi un caisson semi-cylindrique, dans l'espace interne (78) de ce caisson semi-cylindrique sont logées plusieurs résistances (79) s'étendant longitudinalement, dans cet espace débouche un tube (80) d'alimentation en vapeur et cette vapeur ressort du caisson en passant à travers une série de trous (81) percés dans la demi-coquille interne (74).

**13.** Appareil suivant l'une quelconque des revendications 7 à 9 caractérisé en ce qu'il comprend un corps (87) dans lequel se trouve un générateur de vapeur (88) qui alimente un dispositif (89) comportant une résistance (91) et desservant la vapeur surchauffée dans des tubes (93,94) qui aboutissent à des postes de cuisson comprenant des enceintes de cuisson (95,96) équipées respectivement de colliers chauffants (97,98), chacun de ces postes comprenant, à sa partie inférieure, un plateau horizontal (98) qui peut être abaissé ou soulevé au moyen d'un levier (99) et sur lequel peut être placé un plat (101) dans lequel est placé l'aliment à cuire.

**14.** Appareil suivant l'une quelconque des revendications 7 à 9 caractérisé en ce qu'il comprend une enceinte de cuisson interne (102), en forme de cloche, qui est équipée, sur sa surface externe, d'un élément de chauffage électrique (103), cette enceinte de cuisson interne (102) est coiffée, à une certaine distance, par une autre enceinte externe (104) en forme de cloche qui porte, sur sa surface externe, un élément chauffant (105), les deux enceintes (102,104) délimitant ainsi, entre elles, un conduit (106) qui communique avec un conduit (107) d'alimentation en vapeur qui débouche dans la face horizontale supérieure de l'enceinte externe (104), et il comporte, par ailleurs, une embase (108) qui est pourvue d'un joint d'étanchéité (109), interposé entre l'embase (108) et une collerette externe inférieure (102a), faisant partie de l'enceinte interne de cuisson (102), cette collerette étant également pourvue à son tour, à sa périphérie, d'un joint d'étanchéité (111) sur lequel repose une collerette externe inférieure (104a) faisant partie de l'enceinte externe (104), la paroi latérale de l'enceinte interne de cuisson (102) est pourvue de saignées verticales (112) pour le passage de la vapeur, à l'intérieur de la partie inférieure de l'enceinte de cuisson interne (102) s'étend une paroi cylindrique (113), qui est soudée à l'embase (108), et qui présente une ouverture centrale à laquelle se raccorde la paroi (103) et une enveloppe externe, en forme de cloche, entoure l'enceinte externe (104), pour assurer l'isolation thermique, elle repose sur l'embase (108), par une collerette externe inférieure (115a), et sa paroi horizontale supérieure est traversée par le tube d'arrivée de vapeur (107).

15. Appareil suivant l'une quelconque des revendications 7 à 9 caractérisé en ce qu'il comprend un four de cuisson (163), dont l'enceinte est équipée d'une résistance chauffante (115), et entretenue à température constante par une sonde de température (165) qui commande une source d'alimentation éléctrique (117), pour alimenter, par une connexion (118), la résistance chauffante (115), dans l'enceinte du four (163) sont disposés plusieurs diffuseurs de vapeur (119,120,121) alimentés respectivement par plusieurs dispositifs de surchauffage (122,123,124), alimentés eux-mêmes en vapeur d'eau par des tubes (125,126,127), chacun de ces dispositifs (122,123,124) étant équipé d'une résistance chauffante alimentée en énergie électrique par des connexions (128,129,130), que commande un dispositif (131) asservi par un dispositif (132) de programmation, pilotage, asservissement, lequel reçoit les connexions de sondes de températures (133,134,135), relevant respectivement la température de la vapeur dans les dispositifs de surchauffage (122,123,124), chacun des dispositifs élévateurs de température (122,123,124) est alimenté en vapeur par un tube (136) en provenance d'un générateur de vapeur (137), piloté en courant électrique par un appareil d'asservissement (138), par l'intermédiaire d'une connexion (139), et alimenté en eau par un tuyau (140), et dans l'enceinte du four de cuisson (163) sont disposés des plats (141,142,143) qui reçoivent des aliments à cuire respectifs (144,145,146) dont chacun possède une sonde de température respective (147,148,149), ces sondes étant reliées à un dispositif de commande de pilotage (150).

16. Appareil suivant l'une quelconque des revendications 8 à 15 caractérisé en ce que le diffuseur de vapeur (121) reçoit un mélange de vapeur d'eau et de gaz, ou d'air, en provenance du dispositif de surchauffage (124), qui est équipé d'une arrivée (151) alimentée par un générateur de gaz ou d'air (152).

**Claims**

1. Method for cooking and reheating food inside an enclosure (3, 95, 96, 102, 114) at atmospheric pressure, in which steam is produced, this steam is superheated and is introduced in the enclosure, characterized in that it comprises the steps consisting in taking the walls of the enclosure (3, 95, 96, 102, 114) to a temperature at least equal to the boiling temperature of water at atmospheric pressure, in projecting said superheated steam onto the food to subject it to a heat treatment which may comprise a plurality of phases, the conditions of temperature of steam, of temperature of walls of the enclosure, and of flowrate of steam being either defined in the course of the treatment, as a function of the difference in temperature between the heart and the surface of the food for the desired cooking, or predefined by a modus operandi or a cooking recipe established during an earlier try.

2. Method according to Claim 1, characterized in that all or part of the steam heat treatment of the food is effected at a low temperature, preferably included between 100°C and 130°C.

3. Method according to either one of Claims 1 and 2, characterized in that the preceding heat treatment may be effected or continued in a temperature range preferably included between 130°C and 300°C, as a function of the physical characteristics of the food substance to be treated and of the desired surface state.

4. Method according to Claim 1, characterized in that, in order to obtain cooking temperatures lower than 100°C, air or any other gas is mixed with steam for the heat-sensitive substances.

5. Method according to any one of the preceding Claims, characterized in that all or part of the heat treatment of the food is effected by a flowrate of steam preferably included between 10% and 100% of the normal flowrate of a steam generator.

6. Method according to any one of the preceding Claims, characterized in that all or part of the heat treatment of the food is effected by preferably maintaining the temperature of the wall of the enclosure close to that of the steam.

7. Apparatus for cooking or reheating food, employing steam, in an enclosure (3, 95, 96, 102, 114) at atmospheric pressure, comprising steam producing means (1), means (2) superheating the steam before it is introduced in the enclosure (3, 95, 96, 102, 114), means (4) for distributing or diffusing this superheated water vapour in the enclosure, and means (6, 7) for controlling the temperature of the steam emerging from the diffuser means (4), characterized in that said means (4) for diffusing the superheated steam open out opposite and in the immediate proximity of the food, and in that it comprises means for heating the walls of the enclosure (3, 95, 96, 102, 114) to a temperature at least equal to the boiling temperature of water at atmospheric pressure, and means (6, 7) for controlling the flowrate of steam emerging from the diffuser (4).

8. Apparatus according to Claim 7, characterized in that it comprises means (5) for regulating the temperature of the walls of the enclosure (3) and the steam diffuser (4) is connected to the steam generator (1) by a tube (21) passing through the superheater device provided with heating means (22).

9. Apparatus according to Claim 8, characterized in that the heating means (22) of the steam superheating means are constituted by a resistor, helically wound around the tube (21) or thereinside, traversed by the steam produced by the steam generator (1), and the temperature of the steam is controlled by a probe (36) placed in a tube (29) extending between the superheating means and the steam diffuser (4), this probe (36) being connected to the means (6) controlling the temperature of the steam leaving the diffuser.

10. Apparatus according to any one of Claims 7 to 9, characterized in that the steam diffuser (66-68; 74, 75) contains a heating element (69, 79) ensuring superheating of the steam.

11. Apparatus according to Claim 10, characterized in that the steam diffuser is constituted by a stainless steel tube (66) pierced with holes (67) and on which is welded a steam-admission tube (68) and, in the axis of tube (66), there extends an electrical resistor (69) of which the two ends are respectively welded on the two ends (70, 71) of the tube (66) and of which the outer terminals (72, 73) are connected to the source of electric current.

12. Apparatus according to Claim 10, characterized in that the steam diffuser is constituted by two coaxial semi-cylindrical half-shells (74, 75) joined and welded to each other, thus forming a semi-cylindrical box; in the inner space (78) of this semi-cylindrical box are housed a plurality of longitudinally extending resistors (79); in this space opens out a tube (80) for supplying steam and this steam emerges from the box, passing through a series of holes (81) pierced in the inner half-shell (74).

13. Apparatus according to any one of Claims 7 to 9, characterized in that it comprises a body (87) in which is located a steam generator (88) which supplies a device (89) comprising a resistor (91) and serving the superheated steam in tubes (93, 94) which terminate at cooking stations comprising cooking enclosures (95, 96) respectively equipped with strip heaters (97, 98), each of these stations comprising, in its lower part, a horizontal plate (98) which may be lowered or raised by means of a lever (99) and on which may be placed a dish (101) in which is placed the food to be cooked.

14. Apparatus according to any one of Claims 7 to 9, characterized in that it comprises an inner cooking enclosure (102), in the form of a bell, which is equipped, on its outer surface, with an electric heating element (103), this inner cooking enclosure (102) is capped, at a certain distance, by another bell-shaped, outer enclosure (104) which bears, on its outer surface, a heating element (105), the two enclosures (102, 104) thus defining therebetween a conduit (106) which communicates with a conduit (107) for supplying steam which opens out in the upper horizontal face of the outer enclosure (104), and it comprises, furthermore, a base (108) which is provided with an O-ring (109), interposed between the base (108) and a lower outer flange (102a), forming part of the inner cooking enclosure (102), this flange also being, in turn, provided on its periphery with an O-ring (111) on which rests a lower outer flange (104a) forming part of the outer enclosure (104), the lateral wall of the inner cooking enclosure (102) is provided with vertical notches (112) for the passage of the steam, inside the lower part of the inner cooking enclosure (102) there extends a cylindrical wall (113) which is welded to the base (108), and which presents a central opening to which the wall (103) is connected and an outer envelope, in the form of a bell, surrounds the outer enclosure (104), to ensure heat insulation, it rests on the base (108), via a lower outer flange (115a), and its upper horizontal wall is traversed by the steam admission tube (107).

15. Apparatus according to any one of Claims 7 to 9, characterized in that it comprises a cooking oven (163) whose enclosure is equipped with a heating resistor (115), and maintained at constant temperature by a temperature probe (165) which controls a source of electrical supply (117) to supply, via a connection (118), the heating resistor (115), in the enclosure of the oven (163) are disposed a plurality of steam diffusers (119, 120, 121) supplied respectively by a plurality of superheating devices (122, 123, 124), themselves supplied with steam via tubes (125, 126, 127), each of these devices (122, 123, 124) being equipped with a heating resistor supplied with electrical energy by connections (128, 129, 130), controlled by a device (131) servo-controlled by a programmation, piloting, servo-control device (132), which receives the connections of temperature probes (133, 134, 135), respectively noting the temperature of the steam in the superheating devices (122, 123, 123), each of the temperature raising devices (122, 123, 124) is supplied with steam via a tube (136) coming from a steam generator (137), piloted with electrical current by a servo-control apparatus (138), via a connection (139), and supplied with water via a pipe (140), and in the enclosure of the cooking oven (163) are disposed dishes (141, 142, 143) which receive respective food (144, 145, 146) to be cooked, of which each presents a respective temperature probe (147, 148, 149), these probes being connected to a piloting control device (150).

16. Apparatus according to any one of Claims 8 to 15, characterized in that the steam diffuser (121) receives a mixture of steam and gas, or air, coming from the superheating device (124), which is equipped with an inlet (151) supplied by a gas or air generator (152).

**Patentansprüche**

1. Verfahren zum Kochen oder Aufwärmen eines Nahrungsmittels im Inneren einer Umhüllung (3,95,96,102,114) bei Umgebungsdruck, bei dem Wasserdampf produziert wird, dieser Dampf überhitzt und in die Umhüllung eingebracht wird, **gekennzeichnet durch** Schritte, die darin bestehen,
   - die Wände der Umhüllung (3,95,96,102,114) auf eine Temperatur zu bringen, die mindestens so groß wie die Siedetemperatur des Wassers bei Umgebungsdruck ist,
   - den überhitzten Wasserdampf auf das Nahrungsmittel aufzubringen, um dieses einer Wärmebehandlung zu unterziehen, welche mehrere Phasen umfassen kann, wobei die Bedingungen hinsichtlich der Wasserdampftemperatur, der Wandtemperatur der Umhüllung, und des Dampfdurchsatzes, entweder im Prozeßverlauf in Abhängigkeit von dem für den Kochvorgang gewünschten Temperaturunterschied zwischen dem Kern und der Oberfläche des Nahrungsmittels bestimmt werden, oder durch eine bzw. ein während vorausgehender Versuche erstellte(s) Vorgehensweise oder Kochrezept vorbestimmt sind.

2. Verfahren nach Anspruch 1, **dadurch gekennzeichnet,** daß der Wärmebehandlungsprozeß des Nahrungs-mittels mittels Dampf ganz oder teilweise bei einer niedrigen Temperatur erfolgt, die vorzugsweise zwischen 100 ° C und 130 ° C liegt.

3. Verfahren nach einem der Anprüche 1 und 2, **dadurch gekennzeichnet,** daß die vorstehende Wärmebehandlung je nach den physikalischen Eigenschaften der zu behandelnden Nahrungsmittelsubstanz und dem gewünschten Oberflächenzustand in einem vorzugsweise zwischen 130 ° C und 300 ° C liegenden Temperaturbereich durch- oder weiterführbar ist.

4. Verfahren nach Anspruch 1, **dadurch gekennzeichnet,** daß zum Erzielen von Kochtemperaturen von weniger als 100°C bei wärmeempfindlichen Substanzen Luft oder ein beliebiges anderes Gas mit dem Dampf gemischt wird.

5. Verfahren nach einem der vorstehenden Ansprüche, **dadurch gekennzeichnet,** daß die Wärmebehandlung des Nahrungsmittels ganz oder teilweise mit einem Dampfdurchsatz, der vorzugsweise zwischen 10% und 100% eines normalen Durchsatzes eines Dampferzeugers liegt, durchgeführt wird.

6. Verfahren nach einem der vorstehenden Ansprüche, **dadurch gekennzeichnet,** daß die Wärmebehandlung des Nahrungsmittels vorzugsweise ganz oder teilweise unter Beibehaltung einer Wandtemperatur der Umhüllung in der Nähe der Dampftemperatur durchgeführt wird.

7. Vorrichtung zum Kochen oder Aufwarmen eines Nahrungsmittels mittels Wasserdampf in einer Umhüllung (3,95,96,102, 114) bei Umgebungsdruck, mit Wasserdampferzeugungseinrichtungun (1), mit Einrichtungen (2) zur Überhitzung dem Wasserdampfes vor seinem Einbringen in die Umhüllung (3,95,96,102, 114), mit Verteil- oder Diffusoreinrichtungen (4) in der Umhüllung für diesen überhitzten Dampf, und Temperaturregelungseinrichtungen (6,7) für den aus den Diffusoreinrichtungen (4) austretenden Dampf, **dadurch gekennzeichnet,** daß die Diffusoreinrichtungen (4) für den überhitzten Dampf dem Nahrungsmittel zugewandt und in dessen unmittelbarer Nähe münden, und daß sie Einrichtungen zur Aufheizung der Wände der Umhüllung (3,95,96,102,114) auf eine Temperatur, die mindestens gleich der Siedetemperatur des Wassers bei Umgebungsdruck ist, und Einrichtungen (6,7) zur Steuerung der aus dem Diffusor (4) ausströmenden Dampfmenge, aufweisen.

8. Vorrichtung nach Anspruch 7, **dadurch gekennzeichnet,** daß sie Einrichtungen (5) zur Temperaturregelung der Wände der Umhüllung (3) aufweist, und der Dampfdiffusor (4) mit dem Dampferzeuger (1) über ein Rohr (21) verbunden ist, welches durch die mit Heizeinrichtungen (22) versehene Überhitzungsvorrichtung durchgeführt ist.

9. Vorrichtung nach Anspruch 8**, dadurch gekennzeichnet,** daß die Heizeinrichtungen (22) der Wasserdampfüberhitzungseinrichtungen durch einen Widerstand gebildet werden, der spiralförmig um das Rohr (21), oder in dessen Innerem, durch das der von dem vom Dampferzeuger produzierte Dampf strömt, gewunden ist, und die Dampftemperatur durch eine Sonde (36) geregelt wird, die in einem Rohr (29) angeordnet ist, welches zwischen den Überhitzungseinrichtungen und dem Dampfdiffusor (4) verläuft, wobei diese Sonde (36) mit den Regeleinrichtungen (6) für die Temperatur des aus dem Diffusor ausströmenden Dampfes verbunden ist.

10. Vorrichtung nach einem der Ansprüche 7 bis 9, **dadurch gekennzeichnet,** daß der Dampfdiffusor (66-68;74,75) ein Heizelement (69,79) enthält, das den Dampf überhitzt.

11. Vorrichtung nach Anspruch 10, **dadurch gekennzeichnet,** daß der Dampfdiffusor durch ein Rohr (66) aus nichtrostendem Stahl gebildet wird, das mit Löchern (67) versehen ist und an dem ein Dampfeintrittsrohr (68) angeschweißt ist, und sich an der Mittellinie des Rohres (66) ein elektrischer Widerstand (69) erstreckt, dessen beide Enden jeweils mit den beiden Enden (70,71) des Rohres (66) verschweißt sind, und dessen außenliegende Anschlußklemmen (72,73) mit der elektrischen Stromquelle verbunden sind.

12. Vorrichtung nach Anspruch 10, **dadurch gekennzeichnet,** daß der Dampfdiffusor durch zwei halbzylinderförmige, koaxiale, zusammengefügte und verschweißte Halbschalen (74, 75) als halbzylinderförmiger Behälter gebildet wird, in dessen Innenraum (78) mehrere sich in Längsrichtung erstreckende Widerstände (79) angeordnet sind und ein Dampfspeiserohr (80) einmündet, dessen Dampf durch eine Anzahl von in der inneren Halbschale (74) angebrachte Löcher (81) aus dem Behälter wieder entweicht.

13. Vorrichtung nach einem der Ansprüche 7 bis 9, **dadurch gekennzeichnet,** daß sie einen Körper (87) aufweist, in welchem sich ein Dampferzeuger (88) befindet, der eine Vorrichtung (89) versorgt, die einen Widerstand (91) aufweist und die den überhitzten Dampf in die Rohre (93,94) weiterleitet, welche an Kochstellen mit Kochumhüllungen (95,96) enden, die jeweils mit Heizringen (97,98) ausgerüstet sind, wobei jede dieser Kochstellen an ihrem Unterteil einen horizontalen Teller (98) aufweist, der mittels eines Hebels (99) abgesenkt oder angehoben werden kann und auf den eine Schüssel (101) mit dem zu kochenden Nahrungsmittel gestellt werden kann.

**14.** Vorrichtung nach einem der Ansprüche 7 bis 9, **dadurch gekennzeichnet,** daß sie eine innere, glockenförmige Kochumhüllung (102) aufweist, die auf ihrer äußeren Oberfläche mit einem elektrischen Heizelement (103) ausgerüstet ist, daß über diese innere Kochumhüllung (102) in einem gewissen Abstand eine weitere äußere, glockenförmige Unhüllung (104) gestülpt ist, welche auf ihrer Außenseite ein Heizelement (105) trägt, wobei diese beiden Umhüllungen (102,104) zwischen sich einen Kanal (106) begrenzen, der mit einer Dampfspeiseleitung (107), die in die obere Horizontalfläche der äußeren Umhüllung (104) einmündet, in Verbindung steht, und daß die Vorrichtung ferner eine Bodenplatte (108) aufweist, die mit einer Dichtung (109) versehen ist, welche zwisehen der Bodenplatte (108) und einem untenliegenden, nach außen gebördelten Flansch (102a) liegt, der einen Teil der inneren Kochumhüllung (102) bildet und seinerseits ebenfalls an seinem Rand mit einer Dichtung (111) versehen ist, auf der ein untenliegender, nach außen gebördelter Flansch (104a) aufliegt, der einen Teil der äußeren Kochumhüllung (104) bildet, daß die Seitenwand der inneren Kochumhüllung (102) mit vertikalen Aussparungen (112) zum Durchtritt des Dampfes versehen ist, daß sich im Inneren des unteren Teils der inneren Kochumhüllung (102) eine zylindrische Wand (113) erstreckt, die mit der Bodenplatte (108) verschweißt ist und die eine zentrale Öffnung aufweist, an die sich die Wand (103) anpaßt und daß die äußere Umhüllung (104) von einer äußeren glockenförmigen Hülle umgeben ist, die für eine thermische Isolierung sorgt und auf der Bodenplatte (108) mit einem untenliegenden, nach außen gebördelten Flansch (115a) aufliegt und deren obere horizontale Wand vom Dampfzuführungsrohr (107) durchquert wird.

**15.** Vorrichtung nach einem der Ansprüche 7 bis 9, **dadurch gekennzeichnet,** daß sie einen Kochofen (163) aufweist, dessen Umhüllung mit einem Heizwiderstand (115) ausgestattet ist und mittels einer Temperatursonde (165), welche über eine Leitung (118) eine elektrische Stromquelle (117) zur Speisung des Heizwiderstandes (115) steuert, auf konstanter Temperatur gehalten wird, daß in der Umhüllung des Ofens (163) mehrere Dampfdiffusoren (119,120,121) angeordnet sind, die jeweils durch mehrere Überhitzungsvorrichtungen (122,123,124) gespeist werden, welche ihrerseits über Rohre (125,126,127) mit Wasserdampf versorgt werden, wobei jede dieser Vorrichtungen (122,123,124) mit einem Heizwiderstand versehen ist, denen über Leitungen (128,129,130) elektrische Energie zugeführt wird und die von einer Einrichtung (131) gesteuert werden, die ihrerseits durch eine Programmierungs-, Führungs- und Regelungseinrichtung (132) angesteuert wird, an welche die Leitungen der Temperatursonden (133,134,135) angeschlossen sind, wobei jeweils die Dampftemperatur in den Überhitzungsvorrichtungen (122,123, 124) berücksichtigt wird, jede der Temperaturerhöhungsvorrichtungen (122,123,124) über ein Rohr (136) mit Dampf versorgt wird, welches von einem Dampferzeuger (137) kommt, der durch eine Regelungsvorrichtung (138) über eine Leitung (139) mit elektrischen Strom und über ein Rohr (140) mit Wasser versorgt wird, und wobei in der Umhüllung des Kochofens (163) Schüsseln (141,142,143) angeordnet sind, in welche die jeweiligen zu kochenden Nahrungsmittel (144,145,146) hineingegeben werden, von denen jedes jeweils eine Temperatursonde (147,148,149) besitzt und diese Sonden mit einer Vorrichtung (150) zur Prozeßsteuerung verbunden sind.

**16.** Vorrichtung nach einem der Ansprüche 8 bis 15, **dadurch gekennzeichnet,** daß dem Dampfdiffusor (121) eine Mischung aus Wasserdampf und Gas oder Luft zugeführt wird, die von der Überhitzungsvorrichtung (124) kommt, welche eine von einem Gas- oder Luftgenerator (152) gespeiste Zuführung (151) aufweist.

Fig. 1

EP 0 335 796 B1

Fig. 2

Fig. 3

EP 0 335 796 B1

Fig:4

Fig:5

*Fig. 6*

*Fig. 7*

Fig.8

Fig.9

Fig:10

Fig:11

*Fig.12*

*Fig.13*

EP 0 335 796 B1

*Fig. 14*

30